# EUROPÄISCHE PATENTSCHRIFT

(11) **EP 3 465 647 B1**
(45) Veröffentlichungstag und Bekanntmachung des Hinweises auf die Patenterteilung: **22.07.2020**
(21) Anmeldenummer: 17729036.8
(22) Anmeldetag: 19.05.2017
(51) Int. Cl.: G08B 17/107, G08B 29/26, G08B 25/14, G08B 29/18, G01N 15/02, G08B 17/103

(54) **VERFAHREN UND GEFAHRENMELDER ZUR ERKENNUNG VON RAUCH**
METHOD AND DETECTOR FOR DETERMINING SMOKE
PROCÉDURE ET DETECTEUR DE DÉTERMINATION DU FUMÉ

(30) Priorität: 24.05.2016 DE 102016209052
(43) Veröffentlichungstag der Anmeldung: 10.04.2019
(73) Patentinhaber: Hekatron Vertriebs GmbH, 79295 Sulzburg (DE)
(72) Erfinder: IGLSEDER, Heinrich, 31552 Rodenberg (DE)
(86) Internationale Anmeldenummer: PCT/EP2017/062106
(87) Internationale Veröffentlichungsnummer: WO 2017/202718

(56) Entgegenhaltungen:
- EP-A1- 2 053 574
- EP-A2- 0 877 347
- WO-A1-94/03792
- JP-A- H0 573 784

## Beschreibung

Die Erfindung betrifft ein Verfahren zur Detektion von Rauch unter Verwendung eines optischen Streulichtdetektors mit mindestens einem Lichtsender, der Licht in ein Messvolumen aussendet, und mit mindestens einem unter mindestens einem Winkel zur Strahlungsachse des Lichtsenders angeordneten Lichtempfänger, der, zumindest von Rauch oder anderen Aerosolen innerhalb des Messvolumens gestreutes, Licht empfängt. Die Erfindung betrifft auch einen Gefahrenmelder, der zur Durchführung des Verfahrens geeignet ist.

Streulichtdetektoren dieser Art sind bekannt und werden weitverbreitet als Gefahrenmelder, insbesondere als Streulichtrauchmelder, zur Branderkennung eingesetzt. Sie können zuverlässig Brände durch den Nachweis von Rauch erkennen. Jedoch können vor allem einfache Ausführungen, die nur einen Streuwinkel und nur eine Wellenlänge nutzen, Rauch nur schlecht von anderen Partikeln wie Staub oder Wasserdampf unterscheiden, was leicht zu falschen Alarmen führt. Um Rauch von anderen Aerosolen besser unterscheiden zu können, werden häufig zusätzliche Sensoren wie Temperatur- und Gassensoren, welche zusätzliche Brandkenngrößen erfassen, zur Beurteilung, ob ein Brand vorliegt, mit herangezogen. Außerdem ist es bekannt, Streulicht aus mehreren Streuwinkeln und/oder mit mehreren unterschiedlichen Wellenlängen ggf. auch in unterschiedlichen Polarisationsebenen zu erfassen. Durch Analyse der, aus verschiedenen Streuwinkeln erfassten Signale, z. B. durch einfache Verhältnisbildung oder auch eine Hauptkomponentenanalyse, können gewisse Rückschlüsse auf die Art der aerosolbildenden Partikel gezogen werden. Diese Gefahrenmelder erfordern jedoch zusätzliche Sensoren, Sender und/oder Filter, was die Gefahrenmelder verteuert.

Ein Streulichtrauchmelder, der zwischen Rauch und Staub unterscheiden kann und dazu nur die Messwerte eines einzigen Streulichtempfängers nutzt, ist z. B. aus der DE 44 00 363 bekannt geworden. Dieser Rauchmelder erstellt aus den, innerhalb einer Zeit Δt aufgenommenen, Messwerten eines Streulichtempfängers eine Häufigkeitsverteilung und vergleicht, zum Unterscheiden zwischen Rauch und anderen feinen Partikeln, diese Häufigkeitsverteilung mit gespeicherten Häufigkeitsverteilungen für Rauch oder Staub. Für Staub soll die Häufigkeitsverteilung einer Normalverteilung entsprechen, während die Häufigkeit der Messwerte bei Rauch zu größeren Messwerten hin abnimmt. Nimmt die Dichte von anfangs erkanntem Rauch in Folge eines Feuers zu, dann wird das Niveau des Feuers (Rauchdichte) anhand der integrierten bzw. durchschnittlichen Messwerte der Zeit Δt bestimmt. Zur Unterscheidung zwischen Rauch und Staub wird hier die Häufigkeitsverteilung einzelner Messwerte genutzt, während zur Bestimmung der Rauchdichte der Durchschnitt oder das Integral aller Messwerte des Zeitintervalls Δt verwendet werden. Eine Staubdichte wird gar nicht bestimmt.

Aus der DE 696 36 022 T2 ist ein anderer Streulichtrauchmelder bekannt geworden, der ein sehr kleines Messvolumen nutzt, in welchem sich zwar mehrere Rauchpartikel befinden können, das aber nur selten von einzelnen großen Staubpartikeln durchquert wird. Diese selteneren Staubpartikel durchqueren nur einzeln das Messvolumen und erzeugen dabei im Messsignal einen kurzen hohen Spitzenwert. Dieser Spitzenwert wird im Messsignal dadurch eliminiert, dass er durch einen älteren kleineren Messwert ersetzt wird. Das so erhaltene veränderte Signal wird dann mit einer Schwelle verglichen, bei deren Überschreiten ein Alarm ausgelöst wird. Dadurch wird erreicht, dass Signalanteile, die durch Staub hervorgerufen werden, nicht zu einem Alarm führen. Jedoch wird durch das extrem kleine Messvolumen, die Empfindlichkeit des Detektors auch gegenüber Rauch deutlich reduziert, außerdem, wird das zur Alarmbestimmung herangezogene Signal künstlich verfälscht, was zusammen mit der reduzierten Empfindlichkeit einen Alarm ungewollt verzögern kann.

Ein Streulichtrauchmelder, der zwischen Rauch und Fasern unterscheiden kann und dazu nur die Messwerte eines einzigen Streulichtempfängers nutzt, ist auch aus der EP 0 877 347 A2 bekannt geworden. Dieser Melder vergleicht zunächst einen Messwert mit einem Schwellwert. Wenn der Schwellwert überschritten wurde, wird der Signalverlauf der vorangegangenen gespeicherten Messwerte untersucht. Fasern werden z. B. bei einem sehr steilen Signalanstieg vermutet.

Ein Streulichtrauchmelder, der die Messwerte eines einzigen Streulichtempfängers, die von Fusseln herrühren unterdrückt, ist aus der EP 2 053 574 A1 bekannt geworden. Dieser Melder bildet zunächst eine mittelwert aus mehreren Werten. Zur Bildung dieses Mittelwertes vergleicht er zunächst einen aktuellen Messwert mit einem Schwellwert. Wenn der Schwellwert überschritten wurde wird der aktuelle Messwert, bei der Bildung des neuen Mittelwertes, durch einen früheren Mittelwert ersetzt. Der neue Mittelwert wird dann mit einer Alarmschwelle verglichen.

Mit der WO 94/03792 A1 ist ein weitere Streulichtrauchmelder bekannt geworden, der aus einer Reihe von Messwerten ein Signalrauschverhältnis bestimmt und aus dem Signalrauschverhältnis mittels exponentieller Glättung einen Diskriminator ableitet. Durch Vergleich des Diskriminators mit einem Schwellwert, wird zwischen Rauch und anderen Aerosolen unterschieden.

Mit der vorliegenden Erfindung sollen ein Verfahren und ein Gefahrenmelder aufgezeigt werden, die es ermöglichen, bereits mit einer einfachen Streulichtsensorik besser zwischen Rauch und anderen Aerosolen zu unterscheiden und/oder die Empfindlichkeit gegenüber Rauch zu erhöhen.

Die Aufgabe wird gelöst durch ein Verfahren nach Anspruch 1 und einen Gefahrenmelder nach Anspruch 11. Vorteilhafte Ausgestaltungen finden sich in den Unteransprüchen 2-10 und 12-15.

Der Lösung der Aufgabe liegen die Erkenntnisse zugrunde, dass zum einen Staubteilchen deutlich größer als Rauchpartikel sind. - Staubpartikel sind meist größer als 1µm, während Rauchpartikel überwiegend kleiner als 1µm im Durchmesser sind. - Zum anderen sind große Partikel deutlich seltener in der Luft verteilt als kleine Partikel. Die großen Partikel liefern aber einen deutlich größeren Beitrag zu einem Signal am Streulichtempfänger als kleinere Partikel, wenn sie sich in dem Messvolumen befinden.

Im erfindungsgemäßen Verfahren zur Detektion von Rauch wird ein optischer Streulichtdetektor verwendet, der mindestens einen Lichtsender und mindestens einen Streulichtempfänger aufweist. Der Lichtsender sendet Licht in ein Messvolumen aus. Rauch- und/oder Staubpartikel, die sich innerhalb des Messvolumens befinden, streuen dieses Licht. Das gestreute Licht wird dann von mindestens einem unter mindestens einem Winkel zur Strahlungsachse des Lichtsenders angeordneten Lichtempfänger empfangen, wobei Messwerte des Lichtempfängers erfasst werden. Erfindungsgemäß werden jeweils in einem Messzyklus wiederholt eine erste Anzahl n von Streulicht-Messwerten von einem einzelnen Empfänger aus einem Streuwinkel erfasst. Diese n Messwerte werden, noch während ihrer Erfassung oder danach, nach deren Größe sortiert. Dabei werden den einzelnen Messwerten einzelne Sortierpositionen zugeordnet. Das Sortieren kann dabei aufsteigend vom kleinsten Messwert zum größten Messwert erfolgen, sodass der kleinste Wert bei der Position 1 und der größte Wert bei der Position n liegt. Andere Sortierreihenfolgen wie die umgekehrte Reihenfolge sind aber ebenso denkbar und geeignet. Außerdem wird wenigstens ein erster Teil m der sortierten Messwerte Rauch zugeordnet, während zusätzlich oder alternativ ein zweiter Teil I Staub zugeordnet werden kann. Der erste Teil wird innerhalb des Bereich der kleineren der sortierten Messwerte zugeordnet und der zweite Teil kann alternativ oder zusätzlich im Bereich der größeren der sortierten Messwerte zugeordnet werden. Zur Bestimmung der Dichte von Rauch wird dann der erste Teil der Messwerte verwendet, während zur Bestimmung einer Staubkonzentration der zweite Teil genutzt werden kann. Bei dem Erfassen der ersten Anzahl n von Messwerten, welche sortiert werden, werden insbesondere Streulicht-Messwerte aus einem Messvolumen erfasst, das aus einem einzelnen Sender und einem einzelnen Empfänger gebildet wird, wobei innerhalb der ersten Anzahl auch nicht zwischen Messwerten mit unterschiedlichen Wellenlängen oder verschiedenen Polarisationsebenen unterschieden wird, bzw. für die Anwendung des Verfahrens, werden muss. Mit Streuwinkel wird ein Raumbereich verstanden, der um die Hauptachse eines einzelnen Winkels herum angeordnet ist und sich durch den Sichtbereich des Empfängers ergibt.

Die Verwendung einer größeren Anzahl n von Messwerten mit z. B. n =50, 100, 1000 oder noch größer ermöglicht, dass statistische Effekte zur Rauch-Erkennung genutzt werden können, die aus der Verteilung unterschiedlich großer Partikel in der zu untersuchenden Umgebungsluft bzw. im Messvolumen resultieren. Das anschließende Sortieren der Messwerte ermöglicht eine leichte Auswertung dieser Effekte. Hier nutzt die Erfindung die Tatsache aus, dass ein einzelner Messwert das integrierte Streulicht aller Partikel im Messvolumen darstellt und während einer Messung stets mehrere bis viele kleine Partikel im Messvolumen vorhanden sind, während die selteneren größeren Partikel zwar seltener nennenswerte Beiträge zum Messwert liefern, dann aber umso größere Messwerte bewirken. Durch die Sortierung gelangen Messwerte, bei denen größere Partikel im Messvolumen enthalten sind, und Messwerte, bei denen keine oder weniger größere Partikel enthalten sind, stets an die gleichen Sortierpositionen. Dieser Effekt kommt bei großen Werten von n stärker zum Tragen. Besonders deutlich wird dieser Effekt dann, wenn die mittlere zu erwartende Anzahl an großen Partikeln im Messvolumen des Streulichtdetektors kleiner ist als die gewählte Anzahl n von Messwerten, die sortiert werden. Es besteht ein gewisser Zusammenhang zwischen der Größe des Messvolumens und der gewählten Anzahl n. Möchte man die Genauigkeit der Rauch- und/oder Stauberkennung erhöhen, nimmt man eine höhere Anzahl n von Messwerten. Es ist grundsätzlich auch denkbar das Verfahren mehrmals mit unterschiedlichen Anzahlen von n zu wiederholen. Z. B. kann in einem ersten Durchgang eine Messung mit 100 Messwerten und in einem zweiten Durchgang eine Messung mit 500 Messwerten erfolgen, wobei die Zuordnungen der Teile zu Rauch oder Staub zu den einzelnen Sortierpositionen analog mit entsprechender Anpassung der Sortierpositionen erfolgt.

Die erfindungsgemäße Erkennung von Rauch und/oder Staub kann weiter verbessert werden, indem zur Gewinnung der ersten Anzahl von Messwerten zunächst eine zweite vorgebbare Anzahl von Messwerten der Signale des Lichtempfängers erfasst wird und aus dieser zweiten Anzahl mindestens ein charakteristischer Wert, z. B. ein Maximum, Minimum, ein Median und/oder Mittelwert, gewonnen wird, und dieser mindestens eine charakteristische Wert als einer oder mehrere der Messwerte der ersten Anzahl von n Messwerten verwendet wird.

In einer vorteilhaften Weiterentwicklung des Verfahrens wird der mindestens eine erste Teil m aus den sortierten Messwerten der ersten Anzahl von n Messwerten in mindestens einem frei wählbaren ersten Fenster zusammengefasst. Zusätzlich oder alternativ wird der zweite Teil I in mindestens einem frei wählbaren zweiten Fenster zusammengefasst. Ein Fenster besteht dabei aus mindestens einem Messwert an einer Sortierposition, bevorzugt werden jedoch die Messwerte mehrerer benachbarter Sortierpositionen zu einem Fenster zusammengefasst. Aus den Messwerten innerhalb eines Fensters kann dann z. B. ein Mittelwert oder Median gebildet werden. Welcher Teil der Messwerte Rauch und welcher Teil der Messwerte Staub zugeordnet wird, ist letztlich von der Art der Sortierung abhängig. Die Zuordnung zu Rauch erfolgt derart, dass die Messwerte im ersten Fenster überwiegend nur Signalanteile von kleineren Partikeln enthalten. Im ersten Fenster sind also nur kleinere oder durchschnittliche Messwerte enthalten. Die Zuordnung zu Staub erfolgt derart, dass die Messwerte im zweiten Fenster vermehrt auch Signalanteile von größeren Partikeln enthalten. Im zweiten Fenster sind also nur größere Messwerte enthalten.

Weiterhin ist es für das Verfahren von Vorteil, dass ein Normalniveau und/oder Nullniveau ermittelt werden kann. Hierfür wird in einem rauchfreien und/oder staubfreien Messvolumen eine Serie erster Anzahlen n der Messwerte erfasst, welche jeweils sortiert und entsprechend ihren Sortierpositionen 1 bis n gemittelt werden und als Normalniveau und/oder Nullniveau abgespeichert werden. Das Mitteln erfolgt, indem alle Messwerte der Serien, die sich auf den jeweils gleichen Sortierposition 1,2,3,...,n befinden, zu einem Mittelwert zusammengefasst werden. Die so erhaltene erste Anzahl von n Mittelwerten kann dann als Normalniveau und/oder Nullniveau abgespeichert werden. Vorzugsweise erfolgt vor dem Abspeichern eine neue Sortierung der n Mittelwerte.

Vorteilhaft ist es dabei, z. B. um Speicherplatz zu sparen, dass mindestens ein erster Teil m aus der gemittelten ersten Anzahl sortierter Messwerte der Serie als Normalniveau und/oder Nullniveau für Rauch abgespeichert wird. Ebenso kann vorteilhaft mindestens ein zweiter Teil I der gemittelten ersten Anzahl sortierter Messwerte der Serie als Normalniveau und/oder Nullniveau für Staub abgespeichert werden. Besonders vorteilhaft ist es dabei, wenn mindestens ein dritter Teil k der gemittelten ersten Anzahl sortierter Messwerte als allgemeines Aerosol-Normalniveau und/oder Nullniveau abgespeichert wird. Dadurch müssen nicht alle n Werte gespeichert werden. Wenn das Messvolumen während der Ermittlung des Nullniveaus vollkommen partikelfrei ist, dann werden unterschiedlich hohen Messwerte nur durch Rauschen der Messanordnung mit all ihren elektronischen Komponenten verursacht. Daher kann als Nullniveau auch ein einziger Median oder Mittelwert gespeichert werden, der aus allen Messwerten gebildet wird, die während der Bestimmung des Nullniveaus erfasst werden.

Bevorzugt wird bei der Aufnahme der Normalniveaus und/oder Nullniveaus das Messvolumen staubfrei oder zumindest rauchfrei gehalten. Dies kann, insbesondere für das Nullniveau, erreicht werden, indem das Messvolumen mit partikelfreier Luft, z. B. mit gefilterter Luft oder mit technischen Gasen, beaufschlagt wird. Vorteilhaft kann ein Gehäuse, zusätzlich noch hermetisch abgedichtet werden, wenn das Messvolumen innerhalb eines Gehäuses liegt.

Zusätzlich oder alternativ kann auch ein Normalniveau im laufenden Betrieb durch eine träge Langzeitmittelung z. B. mittels exponentieller Glättung ständig nachgeführt werden. Das Normalniveau entspricht dann einem Hintergrundsignal, das zum einen die normale Aerosolbeladung der Luft widerspiegelt, die in der überwachten Umgebung regelmäßig vorherrscht, und enthält zum andreren Anteile, welche durch die Streulichtsensoranordnung selbst hervorgerufen werden und welche sich mit einer Degradation und/oder Verschmutzung der Streulichtsensoranordnung ändern. Dieses Normalniveau kann dann, für jeden einzelnen der n sortierten Werte des Normalniveaus, mit den sortierten Werten der aktuellen Messreihe mittels eines exponentiellen Glättungsalgorithmus einzeln nachgeführt werden.

In einer Ausgestaltung des Verfahrens wird die erste Anzahl n von Messwerten derart sortiert, dass der kleinste Messwert an der Sortierposition 1 und der größte Messwert an der Sortierposition n liegt. Bei dieser Sortierreihenfolge wird der erste Teil m aus den sortierten Messwerten im Bereich der Sortierpositionen 1 - 0,7n, vorzugsweise im Bereich 0,1n - 0,5n und besonders bevorzugt im Bereich 0,1n - 0,3n, festgelegt. Der erste Teil wird vorzugsweise Rauch zugeordnet. Ebenso oder alternativ wird der zweite Teil I im Bereich der Sortierpositionen 0,5n - n, bevorzugt im Bereich 0,7n - n und besonders bevorzugt im Bereich 0,8n- 0,95n, festgelegt. Der zweite Teil wird vorzugsweise Staub zugeordnet. Besonders vorteilhaft wird der dritte Teil k aus den sortierten Messwerten im Bereich der Sortierpositionen um 0,5n herum festgelegt.

In einer anderen Ausgestaltung erfolgt bei umgekehrter Sortierrichtung die Festlegung der ersten, zweiten und dritten Teile und die damit verbundene Zuordnung der Messwerte zu Rauch und/oder Staub analog. Bei einer umgekehrten Sortierung, bei welcher der kleinste Messwert an der Sortierposition n und der größte Messwert an der Sortierposition 1 liegt, wird der erste Teil m aus den sortierten Messwerten im Bereich der Sortierpositionen 0,3n - n, vorzugsweise im Bereich 0,5n - 0,9n und besonders bevorzugt im Bereich 0,7n - 0,9n, festgelegt und Rauch zugeordnet. Ebenso oder alternativ wird der zweite Teil I im Bereich der Sortierpositionen 1 - 0,5n, bevorzugt im Bereich 1 - 0,3n und besonders bevorzugt im Bereich 0,05n- 0,2n, festgelegt und vorzugsweise Staub zugeordnet.

Die Zuordnung des ersten Teils zu Rauch und/oder die Zuordnung des zweiten Teils zu Staub ermöglicht die Ausgabe eines Rauchsignals, mit einer deutlichen Reduzierung der Beeinflussung der Signalhöhe durch Staub und oder Wasserdampf. Vorteilhaft lässt sich sogar ein separates Staubsignal generieren, welches alleine oder zusammen mit einem Rauchsignal angezeigt werden kann. Bei der Gewinnung des Rauch und/oder Staubsignals kann zusätzlich zu den Messsignalhöhen an den zugeordneten Sortierpositionen auch die Steigung der Messsignalhöhen berücksichtigt werden, die sich zwischen den Messwerten der einzelnen Sortierpositionen ergibt. Sind wenige große Partikel im Messvolumen vorhanden, dann nimmt diese Steigung zu größeren Messwerten hin überproportional zu. Ein hoher Steigungsbetrag lässt auf Staub schließen und ein kleiner Steigungsbetrag lässt eher auf Rauch schließen. Als Steigung ist in diesem Zusammenhang die erste Ableitung der Messignalhöhen über die Sortierpositionen bzw. der Unterschied zwischen zwei Messwerten an benachbarten Sortierpositionen zu verstehen. Lassen sich über den Verlauf der Sortierten Messwerte keine großen Steigungsänderungen erkennen, kann die Messung mit einer größeren Anzahl n erneut durchgeführt werden.

Zur Ausgabe des Rauchsignals können die aktuellen Messwerte des ersten Teils m, z. B. über die gesamte Fensterbreite gemittelt oder anderweitig zusammengefasst werden und als Rauchsignal ausgegeben werden. Enthält das Fenster nur einen Wert, dann wird dieser Wert für die Ausgabe verwendet. Zur Verfeinerung des Rauchsignals können vorteilhaft zuvor die korrespondierenden Normalniveau- und/oder Nullniveauwerte abgezogen werden. Dazu wird z. B. von dem aktuellen Messwert an der Sortierposition 50, bei n= 100, bzw. 250, bei n = 500,der korrespondierende Normalniveau- und/oder Nullniveauwert der Sortierposition 50 bzw. 250 abgezogen. Analog wird mit weiteren im ersten Teil m ggf. enthaltenen Messwerten verfahren. Wenn nur ein Nullniveauwert gespeichert ist, dann wird dieser von jedem der genutzten sortierten Werte abgezogen. Zur Ausgabe des Staubsignals können die aktuellen Messwerte des zweiten Teils I, z. B. über die gesamte Fensterbreite gemittelt oder anderweitig zusammengefasst, als Staubsignal ausgegeben werden. Enthält das Fenster nur einen Wert, dann wird dieser Wert ggf. weiter verarbeitet ausgegeben. Zur Verfeinerung des Staubsignals können vorteilhaft zuvor die korrespondierenden Normalniveau- und/oder Nullniveauwerte abgezogen werden. Dazu wird z. B. von dem aktuellen Messwert an der Sortierposition 95, bei n= 100, bzw. 485, bei n = 500, der korrespondierende Normalniveau- und/oder Nullniveauwert der Sortierposition 95 bzw. 485 abgezogen. Analog wird mit weiteren im zweiten Teil ggf. enthaltenen Messwerten verfahren. Durch den Abzug der Normalniveau- und/oder Nullniveauwerte können z.B. Rauschen reduziert, Einflüsse von Hintergrundkonzentrationen verringert oder Verschmutzungen kompensiert werden.

In einer vorteilhaften Weiterentwicklung des Verfahrens wird ein Brandalarm festgestellt und/oder ausgelöst, wenn das Rauchsignal einen vorgebbaren und/oder einstellbaren Schwellwert, insbesondere für eine vorgebbare Zeitdauer, überschreitet.

Besonders vorteilhaft kann das Verfahren durchgeführt werden, indem das Messvolumen von einem Luftstrom durchströmt wird, der den zu detektierenden Rauch, insbesondere über eine Rauchansaugleitung von einem Überwachungsbereich zum Messvolumen, transportiert. Dies kann z. B. mit einem bekannten Rauchansaugsystem erfolgen, das Raumluft über, mit Ansauglöchern versehene, Ansaugrohre aus Räumen ansaugt, die überwacht werden sollen, und die angesaugte Luft einem Rauchdetektor zuführt.

Ein zur Durchführung des erfindungsgemäßen Verfahrens geeigneter Gefahrenmelder zur Detektion von Rauch, umfasst mindestens einen Lichtsender, der Licht in ein Messvolumen aussendet, und mindestens einen unter mindestens einem Winkel zur Strahlungsachse des Lichtsenders angeordneten Lichtempfänger. Der Lichtempfänger empfängt Licht, das von Rauch und/oder Staub innerhalb des Messvolumens in dessen Richtung gestreut wird. Der Lichtempfänger liefert Signale, deren Höhe dem empfangenen Licht entsprechen. Messwerte der Signale des Lichtempfängers werden z. B. mit einer Steuerungs- und/oder Auswerteeinheit erfasst. Der erfindungsgemäße Gefahrenmelder umfasst weiterhin einen Speicher, in dem eine erste Anzahl n der erfassten Messwerte, insbesondere Messwerte von Streulicht aus einem Messvolumen, das aus einem einzelnen Sender und einem einzelnen Empfänger gebildet wird, abgelegt wird, und weist eine Sortiereinrichtung auf, welche die erste Anzahl n der erfassten Messwerte der Größe nach sortiert und einzelnen Sortierpositionen zuweist. Die Sortiereinrichtung kann ein Teil der Steuerungs- und/oder Auswerteeinheit sein. Die Steuerungs- und/oder Auswerteeinheit, welche der Gefahrenmelder umfasst, ist dazu eingerichtet ist, mindestens einen ersten Teil m, der sortierten Messwerte, der ersten Anzahl von n Messwerten, Rauch zuzuordnen und zusätzlich oder alternativ einen zweiten Teil I, der sortierten Messwerte, Staub zuzuordnen. Vorzugsweise liegt der erste Teil innerhalb des Bereich der kleineren der sortierten Messwerte und/oder der zweite Teil im Bereich der größeren der sortierten Messwerte.

Vorzugsweise ist die Steuerungs- und/oder Auswerteeinheit, eingerichtet, den mindestens einen ersten Teil m, der sortierten Messwerte, der ersten Anzahl von n Messwerten, in mindestens einem frei wählbaren ersten Fenster zusammenzufassen. Zusätzlich oder alternativ ist die Steuerungs- und/oder Auswerteeinheit eingerichtet, den zweiten Teil I, der sortierten Messwerte, der ersten Anzahl von n Messwerten, in mindestens einem frei wählbaren zweiten Fenster zusammenzufassen.

Vorteilhaft ist die Steuerungs- und/oder Auswerteeinheit eingerichtet, die aktuellen Messwerte des ersten Teils m als Rauchsignal auszugeben, vorzugsweise nach Abzug korrespondierender Normalniveau- und/oder Nullniveauwerte und vorzugsweise über alle im ersten Teil enthaltenen Messwerte gemittelt. Zusätzlich oder alternativ ist die Steuerungs- und/oder Auswerteeinheit eingerichtet, die aktuellen Messwerte eines zweiten Teils I als Staubwert auszugeben, vorzugsweise nach Abzug der korrespondierenden Normalniveau- und/oder Nullniveau-Werte und vorzugsweise über alle enthaltenen Messwerte gemittelt.

Nach einer Weiterentwicklung des Gefahrenmelders ist die Steuerungs- und/oder Auswerteeinheit dazu eingerichtet, ein Brandalarmsignal zu erzeugen, wenn das Rauchsignal einen vorgebbaren und/oder variablen Schwellwert für eine vorgebbare Zeitdauer überschreitet.

Bevorzugt umfasst der Gefahrenmelder einen Lüfter, der Luft, insbesondere über eine Ansaugleitung, aus einem zu überwachenden Raum ansaugt und dem Messvolumen zuführt, so dass das Messvolumen von der Luft aus dem zu überwachenden Raum durchströmt wird. Dies hat den zusätzlichen Vorteil, dass in der Luft enthaltener Rauch und/oder Staub innerhalb des Messvolumens ständig erneuert werden und so die statistischen Effekte noch deutlicher zum Tragen kommen.

Das erfindungsgemäße Verfahren zur Detektion von Rauch ermöglicht, bereits bei einfachen Streulichtrauchdetektoren, welche nur einen Sender und einen Empfänger aufweisen, eine deutliche Verbesserung der Raucherkennung. Dennoch lässt sich das erfindungsgemäße Verfahren auch in Kombination mit zusätzlichen Sensoren wie Temperatur und Gassensoren und/oder in Verbindung mit komplexen Streulichtrauchdetektoren vorteilhaft einsetzen, welche zusätzlich mehrere Streuwinkel, Extinktion, mehrere Wellenlängen und/oder die Polarisation des Lichtes zur Raucherkennung nutzen.

Weitere Vorteile für das Verfahren ergeben sich dadurch, dass eine Streulichteinheit, wenn sie aus Lichtsender, Lichtempfänger und dem Messvolumen in einem Gehäuse besteht, hermetisch abgedichtet wird. In einem ersten Schritt bleiben dabei noch wenigstens ein Lufteinlass und/oder wenigstens ein Luftauslass, welche mit Absperreinrichtungen versehen sind, davon ausgenommen und geöffnet.

Durch das hermetische Abdichten der Streulichteinheit wird verhindert, dass unerwünschte Partikel durch Spalten oder Ritzen im Gehäuse der Streulichteinheit in das Messvolumen eindringen und dort die zu untersuchende Luft kontaminieren, welche so ausschließlich und kontrolliert über den Einlass bzw. Auslass in die Streulichteinheit gelangen oder diese verlassen kann.

Bereits ein kleinster Spalt mit nur 10 µm Öffnungsweite stellt eine große Öffnung für 1µm große Partikel dar. Es ist daher leicht vorstellbar, dass kleine Partikel unkontrolliert in die Streulichteinheit einwandern können, die diese innen verschmutzen und eine zu messende Probe verunreinigen können, wenn die Streulichteinheit nicht hermetisch abgedichtet wird.

Ein anderer Vorteil des hermetischen Abdichtens ist auch, dass die Streulichteinheit jederzeit neu kalibriert werden kann. Hierfür wird in einer denkbaren Weiterentwicklung des Verfahrens entweder beim absperrbaren Lufteinlass oder beim absperrbaren Luftauslass eine, mittels eines durchströmten Nullfilters gefilterte, nahezu partikelfreie Luft, in das Messvolumen eingebracht und die vorbestimmbare erste Anzahl n von Messwerten aufgenommen, welche als Nullniveau gespeichert wird. Ein Nullfilter filtert idealerweise alle Partikel, die größer als Gasmoleküle sind, aus der Luft heraus. Tatsächliche Nullfilter filtern zumindest alle Partikel, die größer als 0,2µm sind, aus der Luft heraus. Mit einem Nullfilter gefilterte Luft kann somit als partikelfrei angesehen werden. Die Pumpeinheit ist vorzugsweise als Membran-Pumpe ausgestaltet, die, wenn sie nicht im Pumpbetrieb ist, wie ein Absperrventil abdichtet. Alternativ dazu kann auch eine andere Pumpe verwendet werden, welche mit einem zusätzlichen Absperrventil versehen ist.

Vorteilhaft können der Lufteinlass und Luftauslass noch vor dem Aufnehmen der vorbestimmbaren ersten Anzahl von Messwerten bei rauchfreier Luft und deren Speichern als Nullniveau abgesperrt werden. Besonders vorteilhaft wird zum Aufnehmen der ersten Anzahl von Messwerten für das Nullniveau eine Strömung in der Streulichteinheit erzeugt. Dies kann mittels eines ersten Bypasses, der Pumpeinheit und eines zusätzlichen Absperrventils oder mittels eines zweiten Bypasses und einer zusätzlichen Pumpeinheit erfolgen. Der Bypass kann über separate Ventile zugeschaltet werden und lässt die Luft zirkulieren.

In einer zusätzlichen Weiterentwicklung des Verfahrens werden die erste und/oder zweite Absperrvorrichtung geöffnet, das Messvolumen mit der zu untersuchenden Luft beaufschlagt und die erste und/oder zweite Absperrvorrichtung geschlossen. Vorteilhafterweise wird auch hier in der nun wieder vollständig hermetisch abgedichteten Streulichteinheit eine Strömung erzeugt, wodurch die zu untersuchende Luft zirkulieren kann. Für das Aufnehmen der vorbestimmbaren ersten Anzahl von Messwerten ist es auch hier vorteilhaft, wenn dies während der Strömung durchgeführt wird. Diese Weiterentwicklung des Verfahrens hat gegenüber dem Aufnehmen der Messwerte bei geöffnetem Luftein- und Auslass, den Vorteil, dass eine zu untersuchende Luftprobe über einen längeren Zeitraum untersucht werden kann.

Zweckmäßig werden in dem Verfahren die Streulichteinheit und ein oder mehrere Subsysteme mittels eines Mikroprozessors, welcher als Auswerte- und Steuereinheit eingerichtet sein kann, angesteuert und entsprechende Messdaten des Lichtempfängers und weiterer Sensoren ausgewertet, nachverarbeitet und mittels Anzeigeeinheiten die Ergebnisse der Auswertung und/oder der Nachverarbeitung angezeigt. Zu solchen Subsystemen können weitere Sensoren wie Feuchtigkeits-, Druck-, Strömungs,- und Gassensoren gehören. Durch die Einbeziehung der Messwerte dieser zusätzlichen Sensoren in die Auswertung kann die Auswertung der Messdaten des Lichtempfängers weiter verbessert werden. Außerdem können die Daten der Subsysteme eigenständig verarbeitet und zur Anzeige gebracht werden.

Durch die Ansteuerung des Lichtsenders mittels eines Mikroprozessors wird es möglich, Lichtpulse, die von dem Lichtsender abgegeben werden, sowohl nach Pulsweite, Pulshöhe und/oder Pulsfrequenz frei wählbar und einstellbar zu erzeugen. Dadurch kann man z. B. der Degradation des Lichtsenders entgegenwirken.

Zum Kalibrieren des Messsystems, das zur Ausübung des erfindungsgemäßen Verfahrens verwendet wird, wird die erste Anzahl n der Messwerte mit einem rauchfreien Messvolumen, insbesondere bei einer Rauchkonzentration nahe Null µg/m³, vorzugsweise kleiner 1 µg/m³, erfasst. Nach dem Sortieren der ersten Anzahl von Messwerten bei rauchfreiem Messvolumen, wird mindestens ein Teil daraus für einen Rauch-Wert als Nullniveau abgespeichert. Außerdem kann noch ein zweiter Teil der sortierten ersten Anzahl von Messwerten bei rauchfreiem Messvolumen für einen Staubwert-Wert als Nullniveau abgespeichert werden. Zum Beispiel kann bei der Konzentration von 0 µg/m³ der Messwert 600 an der Sortierposition 50 und 51 der sortierten ersten Anzahl von Messwerten als Nullniveau für Rauch gespeichert werden. Ebenso kann der Wert 633 an der Sortierposition 95 als Nullniveau für Staub gespeichert werden.

Um später aus den Messwerten auf absolute Rauchkonzentrationen schließen zu können, wird für jeden Rauch-Wert oder Staub-Wert eine eigene Kalibrierfunktion festgelegt, z. B. [Messwert x Konstante x ((2,5µg/m³)/Messeinheit)-Nullniveau]. Diese Kalibrierfunktion kann z. B. durch Vergleich mit Messwerten eines Referenzgerätes, z. B. einem Partikelzähler, ermittelt werden. So erhält man z. B. die aktuelle Konzentration für Rauch durch Berechnung der Kalibrierfunktion für Rauch, indem man den aktuellen Messwert an Sortierposition 50 in die Kalibrierfunktion einsetzt, wenn man beim Zuordnen der Rauch-Werte der 50. Sortierposition Rauch zugeordnet hat.

Eine besonders genaue Kalibrierung erhält man dann, wenn das Raucherkennungssystem bei unterschiedlichen Rauchkonzentrationen kalibriert wird und neben Nullniveaus neue Kalibrierwerte wie Parameter von Kalibrierkurven und Gravimetriefaktoren abgespeichert werden.

Z. B. wird in dem erfindungsgemäßen Verfahren mindestens ein erster Teil aus sortierten Messwerten der ersten Anzahl von Messwerten in mindestens einem frei wählbaren, insbesondere per Software einstellbaren, Messfenster zusammengefasst und entsprechenden Rauchkonzentrationen zugeordnet. So wird während und auch infolge der Kalibrierung z. B. dem 51. der sortierten Werte die Konzentration 109 µg/m³ zugewiesen, wenn dessen Amplitudenwert 650 Einheiten beträgt, oder z. B. dem 90. - 93. Wert die Staubkonzentration 70 µg/m³ zugewiesen wird, wenn deren Amplitudenwerte bei dieser Konzentration z. B. 700 Einheiten betragen.

In einer Weiterentwicklung des erfindungsgemäßen Verfahrens werden von Zeit zu Zeit, vorzugsweise regelmäßig, Nullniveaumessungen wiederholt. Durch einen Vergleich der aktuellen Nullniveaus mit vorangegangenen Nullniveaus wird die Degradation der Streulichteinheit bestimmt, und die Rauchmesswerte werden entsprechend korrigiert. Der erfindungsgemäße Gefahrenmelder kann weitere Verbesserungen enthalten. Bei einer solchen Verbesserung umfasst der Gefahrenmelder eine photometrische Streulichteinheit. Die Streulichteinheit besteht aus mindestens einem Lichtsender, der, vorzugsweise gepulste, Lichtsignale aussendet, und aus mindestens einem unter einem oder mehreren Winkeln angeordneten lichtempfindlichen Empfängersystem, das das gestreute Licht von Rauch empfängt. Die Streulichteinheit ist hier mit Messvolumen zunächst mit Ausnahme eines Lufteinlasses und Luftauslasses hermetisch dicht, und die Streulichteinheit ist mit Messvolumen an dem Lufteinlass und Luftauslass mit Absperreinheiten versehen, mittels derer der Lufteinlass und Luftauslass manuell oder automatisch absperrbar sind. Die hermetische Dichtigkeit ist sinnvoll, da sonst Partikel, durch vorhandene Spalten, unkontrolliert in die Streulichteinheit eindringen können und die Streulichteinheit verschmutzen bzw. die zu untersuchende Luft kontaminieren können.

Vorteilhaft kann es sich auswirken, dass sich in der Streulichteinheit nach dem Lichtsender und/oder vor dem Lichtempfänger optische Fokussiersysteme befinden, mit denen sich Lichtstrahlen aufweiten und/oder kollimieren bzw. fokussieren lassen. Ebenso vorteilhaft ist es, dass sich in der Streulichteinheit gegenüber dem Lichtsender ein optischer Sumpf befindet, der das nicht gestreute Licht absorbiert. Ferner ist es zweckmäßig, wenn zur Aussendung von Lichtsignalen Laser, Halbleiterdioden und/oder Weißlicht, beziehungsweise zum Empfangen des gestreuten Lichts Photodioden, Phototransistoren, Photomultiplier und/oder photosensitive CMOS-Chips verwendet werden.

Die Figuren zeigen jeweils im Einzelnen:
Die Fig.1 zeigt eine schematische Übersicht eines Gefahrenmelders.
Fig.2 zeigt den Streulichtdetektor mit Sender, Empfänger, Lichtfalle und
Fokussiereinrichtungen.
Fig.3 zeigt eine erweiterte Darstellung der Figur 1 mit zusätzlichen Subsystemen.
Fig.4 zeigt einige Lichtsendepulse und Fig.5 dazugehörige Empfangspulse, mit mehreren Streulicht-Messwerten.
Fig.6 zeigt eine sortierte Reihe von Streulicht-Messwerten.
Fig.7 zeigt ebenfalls eine sortierte Reihe von Streulicht-Messwerten mit zugeordneten Rauch- und Staub-/Wasserdampf-Positionen.
Fig.8 zeigt sortierte Messreihen bei unterschiedlichen Rauch- bzw. Staubkonzentrationen.

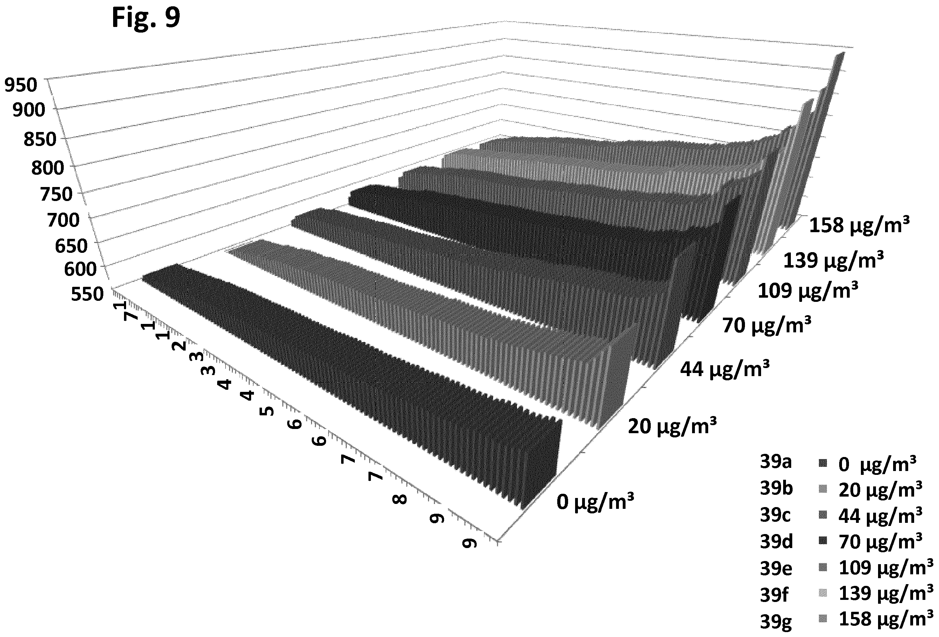

Fig.9 zeigt dieselben Messreihen wie Fig.8 in dreidimensionaler Darstellung.
Fig.10 zeigt eine Messreihe, die mit verschiedenen Gefahrenmeldern aufgenommen wurden, u. a. mit mehreren erfindungsgemäßen Gefahrenmeldern und einem hochgenauen Partikelzähler als Referenzgerät.
Fig.11 zeigt eine Korrelationsgerade zum Vergleich des erfindungsgemäßen Gefahrenmelders mit einem Referenzmessgerät.
Fig.12 zeigt eine Korrelationsgerade zum Vergleich zweier erfindungsgemäßer Gefahrenmelder untereinander.
Fig.13 zeigt Messungen mit Dolomitpartikeln.
Fig.14 zeigt die gemessene Degradation einer Sendediode in Prozent im Zeitraum bis 10.000 Stunden.
Fig.15 zeigt einen Gefahrenmelder, bei dem zusätzlich, innerhalb des Systems generierte, partikelfreie Luft auf die optischen Komponenten geleitet wird.

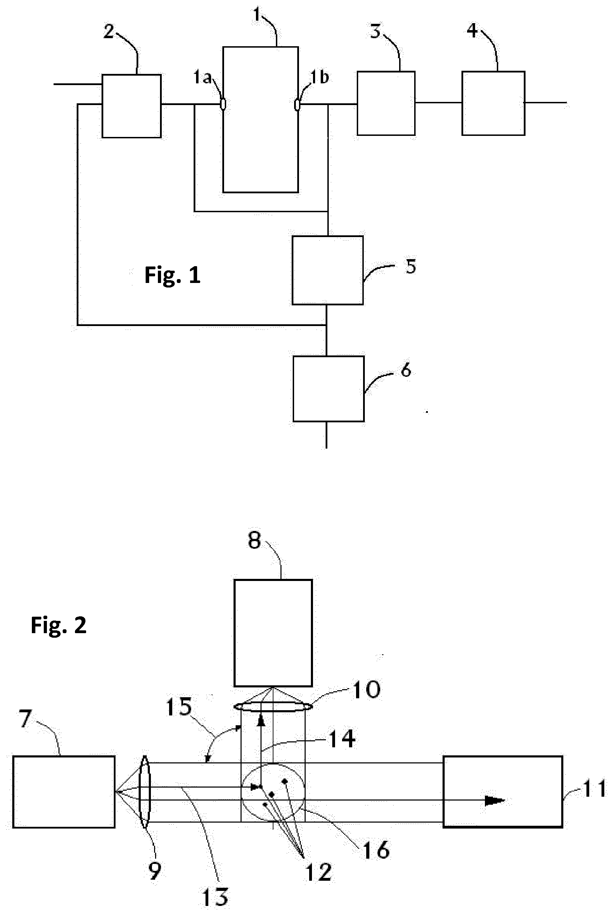

Der Gefahrenmelder ist schematisch in Fig.1 dargestellt. Er besteht in diesem Beispiel aus einem Streulichtrauchdetektor in einem Gehäuse 1 mit einem Einlass 1a und einem Auslass 1 b. Zusammen mit dem Gehäuse 1 bildet der Streulichtrauchdetektor eine photometrische Streulichteinheit 1, die bis auf den Einlass 1a und den Auslass 1b vollständig hermetisch abgedichtet ist, was z. B. durch Abkleben von Spalten und Fugen mit luftdichten Folien erreicht werden kann. Bei diesem Detektor können zusätzlich sowohl der Einlass 1a mit einem Einlassventil 2 und auch der meist 180 Grad gegenüberliegende Auslass 1b mit einem Auslassventil 3 hermetisch verschlossen werden. Dazu eignen sich vorzugsweise Magnetventile, die leicht durch einen Mikroprozessor angesteuert werden können. Es eignen sich jedoch auch andere Ventilbauarten oder Absperrsysteme. Zwischen Auslassventil 3 und Auslass 1b der Streulichteinheit ist mittels eines T-Stückes ein sogenanntes Nullfilter 5 zwischengeschaltet. Dieses Nullfilter kann durch eine elektrische Pumpeinheit 6 mit Umgebungsluft beaufschlagt werden. Bei geöffneten Ventilen sorgt eine Saugeinheit 4, vorzugsweise ein kleiner leiser Axiallüfter, für einen Volumenstrom von vorzugsweise etwa 1 Liter/min durch die Streulichteinheit 1 und das darin enthaltene Messvolumen 16.

Das hier beschriebene, Verfahren beginnt vorzugsweise mit einem Selbsttest, in dem die Umgebungstemperatur, -luftfeuchtigkeit, -druck, die Temperatur des Streulichtdetektors und eine so genannte Nullkalibrierung den eigentlichen Messungen vorgeschaltet sind. Dabei werden Umwelt-Messsensoren abgefragt, welche als Subsysteme in den Gefahrenmelder eingefügt sind. Zusätzlich wird das Auslassventil 3 angesteuert, das den Einlass des Sauggebläses 4, vorzugsweise ein leiser Axiallüfter, verschließt. Es kann statt des Axiallüfters aber auch eine kleine Vakuumpumpe eingesetzt werden. Durch Überdruck in den Luftleitungen wird die Streulichteinheit mit partikelfreier Luft, die vorzugsweise keine Partikel größer 0,2µm enthält, gespült. Der Einlass 1a dient in diesem Fall als Auslass. Nach kurzer Zeit, vorzugsweise 20 Sekunden, wird auch das Einlassventil 2 geschlossen. In der Streulichteinheit befinden sich nun keine Partikel, die größer 0,2µm sind. Diese geringe Partikelkonzentration, kleiner 1 µm/m³, dient nun als Ausgangspunkt für die Aufnahme eines Null-Niveaus.

Als Basis des Streulichtdetektors dient ein Lichtsender 7, der Licht in einer speziellen Wellenlänge aussendet, z.B. ein Laser oder Halbleiterdioden, welche im Wellenlängenbereich 250 bis 900 nm oder im IR-Bereich senden. Dieses Licht wird unter einem gewissen Winkel 15, z.B. zwischen 90° bis 135°, zum Lichtempfänger in das Messvolumen (16) gestrahlt. Trifft nun das abgestrahlte Licht, z. B. als Lichtstrahl 13, auf die Oberfläche eines Rauch- oder Staubpartikels 12, wird entsprechend der Oberfläche des Partikels und dessen Größe sowie dessen Rauhigkeit, Albedo, Form, Durchmesser etc. ein Anteil dieses Lichtes gestreut. Mit einem Lichtempfänger 8 kann man nun dieses Streulicht detektieren und in ein elektrisches Signal umwandeln und ggf. zur weiteren Verarbeitung verstärken. Nach dem Lichtsender 7 und vor der Lichtempfangseinheit befinden sich optische Fokussiersysteme 9 und 10. Vorzugsweise können auch einfache Linsen verwendet werden. Als lichtempfindliche Empfänger 8 dienen meist Photodioden, Phototransistoren oder Photomultiplier. Auch ein photosensitiver CMOS-Chip, wie er in vielen Digitalkameras eingesetzt wird, eignet sich dazu. Das entwickelte Verfahren eignet sich für sämtliche Varianten, wobei in dieser Entwicklung vorzugsweise eine preiswerte Photodiode und ein Phototransistor Anwendung finden.

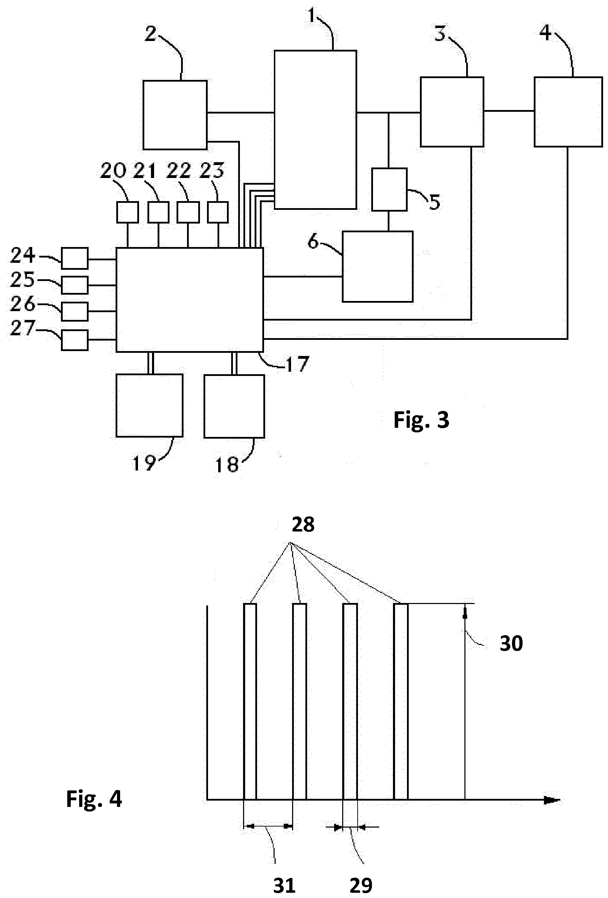

Der Gefahrenmelder ist in Fig.3 schematisch dargestellt. Die Steuer- und Auswerteschaltung dieses Melders ist ein Mikroprozessor 17 mit zahlreichen elektrischen Ein- und Ausgängen. Mittels PWM werden Pulse 28 einer Länge 29 mit einer Frequenz 31 für den Lichtsender generiert und dem Streulichtdetektor zugeführt. Mittels eines A/D-Wandlers, vorzugsweise mit 1 MHz Abtastfrequenz, werden die Signale des Lichtempfängers abgetastet, z.B. das Maximum bestimmt und in einen Zwischenspeicher abgelegt.

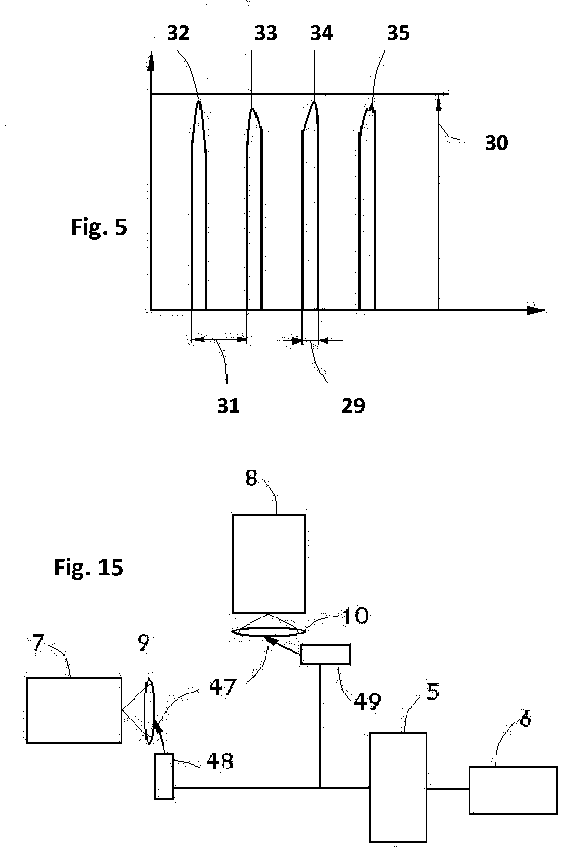

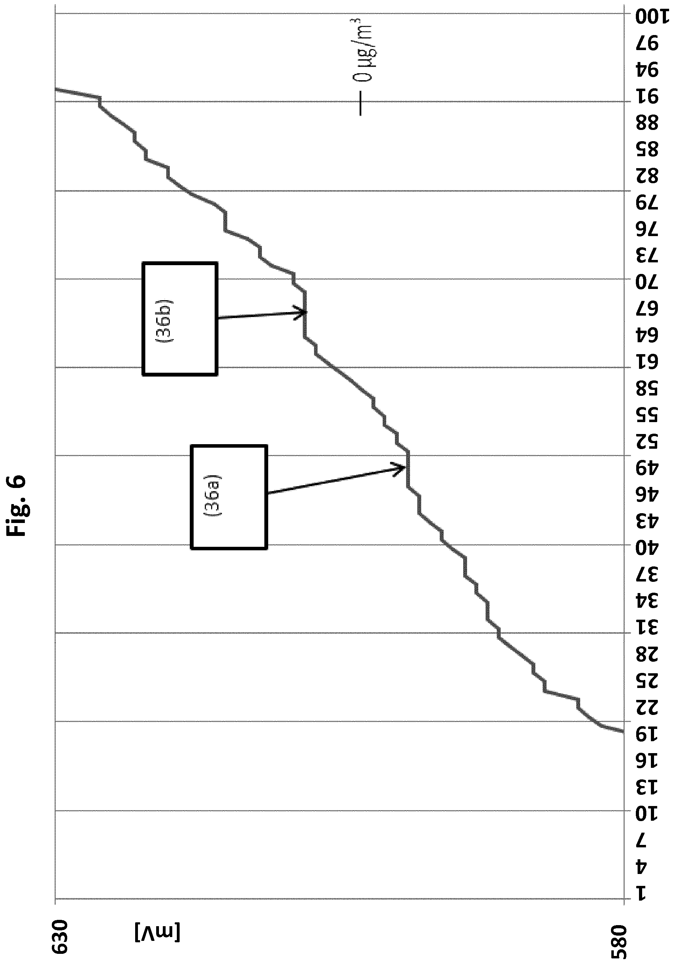

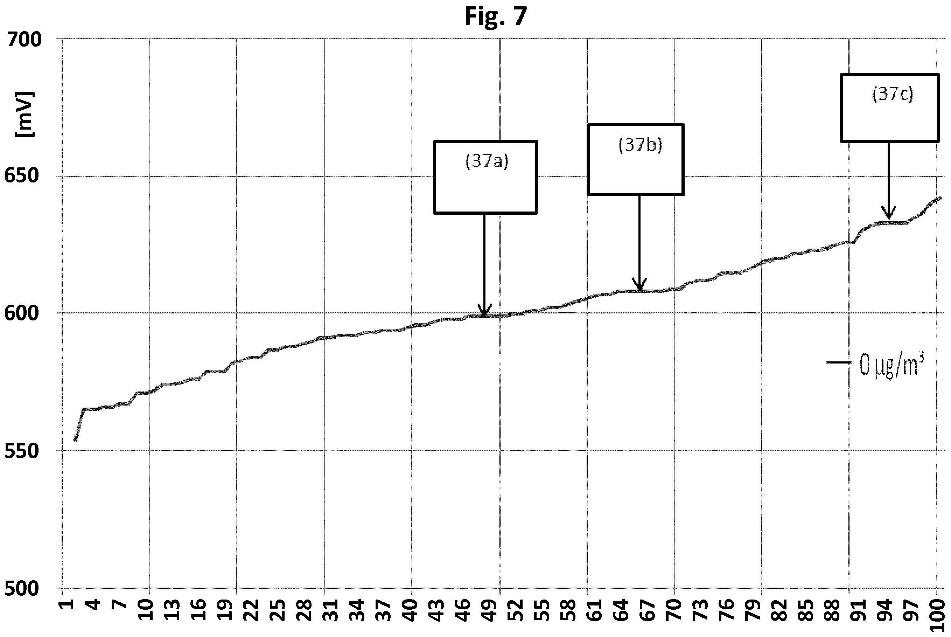

Um die Genauigkeit bei der Bestimmung der Rauchkonzentration zu erhöhen, ist ein kurzes Sendesignal 28 oder ein Lichtpuls hilfreich (etwa 10 bis 300 µs lang, Pos. 29), der bzw. das mit einer hohen Frequenz 31 (etwa 0,1 KHz bis 0,1 MHz-Bereich) abgestrahlt wird. Alternativ dazu kann auch das Empfangssignal mit einer hohen Abtastrate abgetastet werden. Zusätzlich ist eine homogene Luftströmung mit einem konstanten Volumenstrom sinnvoll. Übliche Volumenströme im Messvolumen 16 liegen bei ca. 1 Itr./min. Die Strömungsgeschwindigkeit im Messvolumen kann z. B. auf 1 cm/s genau bestimmt und die Drehzahl der Saugeinheit 4 mittels Potentiometer auf den Zielwert fein eingestellt werden. Die photoempfindliche Empfangseinheit 8, in diesem Fall ein preiswerter Fototransistor, empfängt nun zahlreiche Lichtpulse mit unterschiedlichen Intensitäten entsprechend der Streuung 14 der Partikel 12 zum Zeitpunkt der Aussendung und Dauer des Aufenthaltes im Meßvolumen 16. Die Empfangspulse 32, 33, 34, 35 in Fig.5 sind nicht rechteckförmig, sondern weisen an nicht genau vorhersagbaren Positionen ein lokales Maximum auf. Die genaue Erfassung der maximalen Intensität ist jedoch für eine präzise Messung der Rauchkonzentration vorteilhaft. Dazu wird die Amplitude des empfangenen Streulichtes innerhalb der Sendezeit von vorzugsweise 10 µs bis 300µs Länge mehrmals, vorzugsweise 3 - 5-mal, abgetastet und aus den abgetasteten Messwerten wird das Maximum bestimmt und zwischengespeichert. Später werden die zwischengespeicherten Werte nach Größe sortiert. Jeder einzelne Puls pro Zeiteinheit ergibt eine integrale Information über alle Partikel (0,3µm bis > 10 µm und größer), die sich im Messvolumen 16 während der Messung aufgehalten haben. Aufgrund der natürlichen inhomogenen Partikelkonzentration schwanken diese Werte erheblich. Es ist leicht nachzuvollziehen, dass große Partikel, z.B. 10 µm große Teilchen, etwa die 100-fache Streuintensität (winkelabhängig) haben wie 1 µm kleine Partikel. Da übliche Partikelkonzentrationen aber umgekehrt proportional viele kleine Partikel im Vergleich zu großen Partikeln aufweisen, werden in einem gewissen Zeitfenster immer wenige große und meist viele kleine Partikel im Verbund erfasst. Wählt man zum Beispiel ein Messfenster von 1 sec, erhält man bei einer Sendefrequenz bzw. Abtastfrequenz von 100 Hz bzw. 300-500 Hz 100 Intensitätswerte, die bei diesem Verfahren nun nach deren Größe sortiert werden. Eine typische sortierte Folge von Messwerten bei Rauchfreiem, insbesondere partikelfreiem, Messvolumen 16, ist in Fig.7 dargestellt. Fig.6 zeigt einen Ausschnitt der Verteilung aus Fig. 7. In den Fig.6 und 7 kann man Plateaus erkennen, wie 36a/37a, 36b/37b und 37c, die zur Festlegung von Nullniveaus, herangezogen werden können, z.B. wählt man das Nullniveau für Rauch in diesem Beispiel beim 48. der sortierten Werte, was etwa einer Sensor-Offset-Spannung von 600 mV entspricht. Beides, die Offset-Spannung und die Position in der sortierten Reihe, wird einer Rauchkonzentration als Nullniveau, zugewiesen. Simultan dazu kann man z.B. einem zweiten Plateau, z.B. an der Position 67 und/oder 95 der sortierten Werte Staub und/oder Wasserdampf, als Nullniveau 36b/37b oder 37c zuweisen. Es werden z.B. 100 Intensitätswerte pro Sekunde erfasst und sortiert. Der Mikroprozessor 17 steuert eine alphanumerische LED-Anzeigeeinheit 18, vorzugsweise mit 3-4 Digits, mit der der aktuelle Messwert angezeigt werden kann. Zusätzlich steuert dieser Mikroprozessor auch eine Lichtdiodeneinheit 19, die bei kritischen Rauchniveaus unterschiedliche LEDs ansteuert und aufleuchten lässt. Sinnvollerweise eignet sich dazu eine Ampelfunktion mit den Farben grün, gelb, rot. Bei unbedenklichen Werten leuchten entsprechende LEDs grün, bei einem Voralarm gelb und bei Alarm rot. Ein Voralarm kann z. B. beim Überschreiten eines Schwellwertes ausgelöst werden, der unter dem eines Alarmschwellwertes liegt.

Neben der Rauchkonzentration werden vom Mikroprozessor auch noch wichtige Umweltdaten wie Umgebungstemperatur, -druck und -luftfeuchte mittels der entsprechenden Sensoren 20, 21, 22 bestimmt. Um die Temperaturdrift zu kompensieren, z.B. 2 bis 4 µg/m³ pro Grad Celsius Temperaturunterschied, wird auch die Temperatur des Streulichtdetektors 1 mittels Temperatursensor 23 genau erfasst. Die Genauigkeit beträgt vorzugsweise 0,1 °C. Durch eine vorherige Kalibrierung des Temperaturganges der Messelektronik und der Bestimmung des Temperaturkoeffizienten lässt sich die Genauigkeit der Rauchmesswerte, auch in einem großen Temperaturbereich, z.B. -20 - 60°C, deutlich verbessern. Geringe Temperaturdriften von nur 0,1 µg/m³ pro Grad Celsius können damit realisiert werden. Das gleiche gilt für den Einfluss des Druckes auf das Luftvolumen und den Einfluss der Feuchtigkeit auf die Messung der Partikelkonzentration. Mit speziellen Routinen und Kalibrierungen lassen sich negative Einflüsse durch Druckschwankungen bzw. hohe Luftfeuchtigkeit kompensieren oder zumindest stark reduzieren.

Der Mikroprozessor 17 steuert auch wichtige Schnittstellen 24, 25, 26, 27 an. Für die Kommunikation und Steuerung des Mikroprozessors mittels eines Terminalprogramms und zahlreichen Softwarekommandos wird vorzugsweise eine USB-Schnittstelle 24 oder RS232 verwendet. Als zusätzliche oder alternative Schnittstellen 25 können ein LAN-Anschluss, WIFI, Telefon, Mobilfunk und/oder Bluetooth zur weiteren Kommunikation realisiert werden. Ein weiterer Ausgang 26, der z. B einen DAC digital/analog Converter nutzt, dient zur Steuerung von bzw. Informationsübertragung an weitere Geräte wie z.B. Alarmanzeigen, Löschanlagen, Rauchabzüge, Gebläse, Evakuierungssysteme, Gebäudesteuerungen, Gebäudemanagementsysteme oder Raumluftreiniger. Mit einer speziellen Softwareroutine lassen sich ein Offsetwert und eine Steigung des optionalen DAC-Ausganges programmieren. Dies ist sinnvoll, da bei entsprechenden kritischen Werten z.B. Alarmanzeigen, Löschanlagen, Rauchabzüge und/oder Raumluftreiniger automatisch aktiviert werden können und beim Erreichen niedriger Rauchkonzentrationen wieder ausgeschaltet werden. Des Weiteren weist der Gefahrenmelder noch einen mehrkanaligen analogen Eingang 27 auf, mit dem weitere Parameter zur Luftqualität bestimmt werden können. Durch zusätzliche Sensoren können so z.B. die CO-, CO₂-Konzentraion als auch VOC-Bestandteile in der Luft simultan gemessen, zur Branderkennung genutzt und/oder separat angezeigt bzw. an externe Systeme übertragen werden.

Der Mikroprozessor weist vorzugsweise auch eine RTC Real Time Clock auf, mit der zu jeder Messung ein Zeitstempel abgespeichert werden kann, vorzugsweise im Sekundentakt. Mittels einer Speichereinheit, z.B. einer micro-SD-Card, lassen sich sowohl dieses Zeitsignal als auch sämtliche anderen Messwerte in einer Messdatei ab-speichern und zu einem späteren Zeitpunkt z. B. bei Wartungsarbeiten und zu Diagnosezwecke auslesen.

Dieses Verfahren lässt nun sowohl die Bestimmung von Rauchkonzentrationen zu, als auch die gleichzeitige Bestimmung von Staub-, und/oder Wasserdampfkonzentrationen. Mittelt man nun die Intensitätswerte der aktuellen Messreihe, die benachbart zu den, z. B. bereits während der Kalibrierung, zugeordneten Positionen wie der 48., 67. und der 95. liegen mit plus/minus n-Werten, vorzugsweise mit 1 - 5 Werten links und rechts davon, kann die Genauigkeit weiter gesteigert werden. Um einen Alarm besser zu verifizieren und Rauch noch besser von Staub bzw. Wasserdampf zu unterscheiden kann die Anzahl der zu sortierenden Intensitätsmesswerte, z.B. bereits bei einem anliegenden Voralarm, von ursprünglich vorzugsweise n=100 Stück um eine Größenordung auf z.B. n=1000 Stück erhöht werden. Dadurch treten die statistischen Effekte deutlicher hervor und die Abgrenzung zwischen Rauch und/oder Staub bzw. Wasserdampf kann verbessert werden. Bei einer Änderung der Anzahl der zu sortierenden Messwerte wird auch eine Anpassung der Sortierpositionen, der zugeordneten Teile vorgenommen. Wenn z.B. bei n = 100 die Sortierposition 95 für Staub gewählt wurde, entspricht dies bei einer Verzehnfachung der Anzahl n auf 1000 der Sortierposition 950 (=95*10) für Staub.

Die Anzahl der zu sortierenden Messwerte ist grundsätzlich frei wählbar. Vorzugsweise werden Werte von 100, 300, 600, 900 und 6000 gewählt. Dabei besteht ein gewisser Zusammenhang zwischen der gewählten Anzahl n und der Größe des Messvolumens. Bei kleineren Messvolumina führen bereits kleinere Anzahlen von n zu einem guten Ergebnis, während bei größeren Messvolumina, bei denen mehr größere Partikel im Messvolumen zu erwarten sind, größere Werte von n sinnvoll sind.

Mittels eines speziellen Softwarekommandos lässt sich die sortierte Amplitudenverteilung pro Messfenster in einer Matrix ausgeben. Anhand dieser Matrix kann überprüft werden, ob die gewählten Bezugswerte für das Nullniveau richtig sind. Gegebenenfalls kann noch feinjustiert werden.

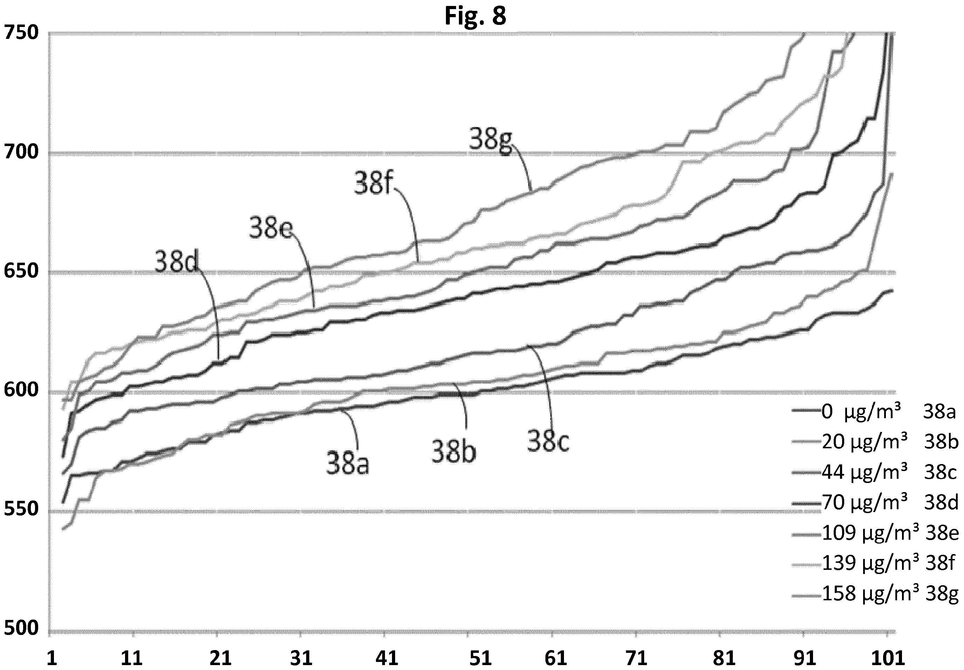

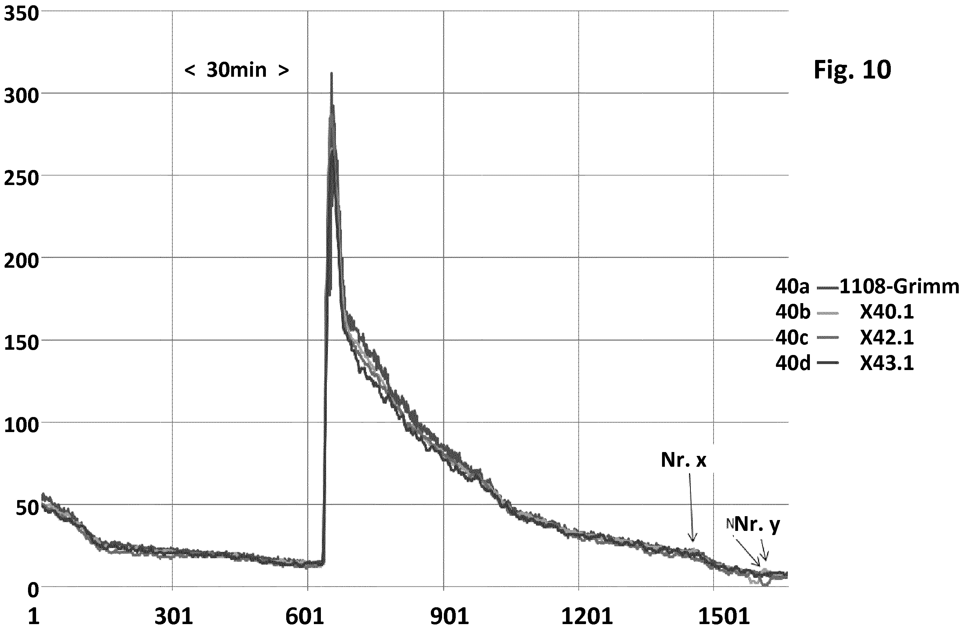

Steigert man nun die Rauchkonzentration, so verschiebt sich diese sortierte Verteilung entsprechend zu höheren Messwertenwerten (650mV bis 2500mV), siehe Verteilungen 38a bis 38g in Fig 8. Diese exemplarisch ausgeführten 7 Verteilungen entsprechen Rauch und Staub mit Konzentrationen von insgesamt 0, 20, 44, 70, 109, 139 und 158 µg/m³. Durch den Vergleich mit Referenzmessgeräten, wurde festgestellt, dass mit einer entsprechend genauen Kalibrierung, mit diesem Verfahren sogar absolute Rauch- und oder Staub/Wasserdampfkonzentrationen gemessen werden können. Als Referenzinstrumente wurden mehrere parallel laufende hochgenaue Absolut-Aerosolspektrometer herangezogen, wie z.B. die Geräte 1.107, 1.108 und 1.109 der Fa. Grimm. Es konnte nachgewiesen werden, dass sich mit diesem Verfahren Auflösungen von 1 µg/m³ erzielen lassen und Genauigkeiten bei der Bestimmung z.B. von Rauch und/oder Staub von kleiner +/- 5 µg/m³ (üblich nur +/-2µg/m³) in Messfenstern von 6 bis 60 Sekunden Länge und bei Konzentrationen unter 100 µg/m³ möglich sind. Fig.10 zeigt mit den Kurven 40a bis 40d einen Vergleich eines Referenzgerätes 40a mit drei Exemplaren erfindungsgemäßer Gefahrenmelder 40b, 40c und 40d.

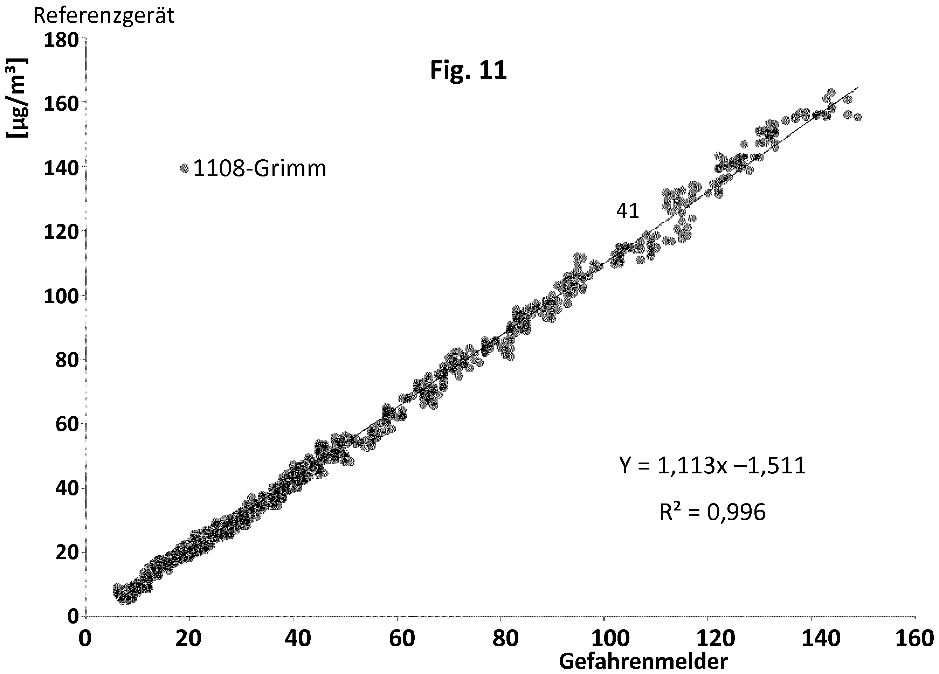

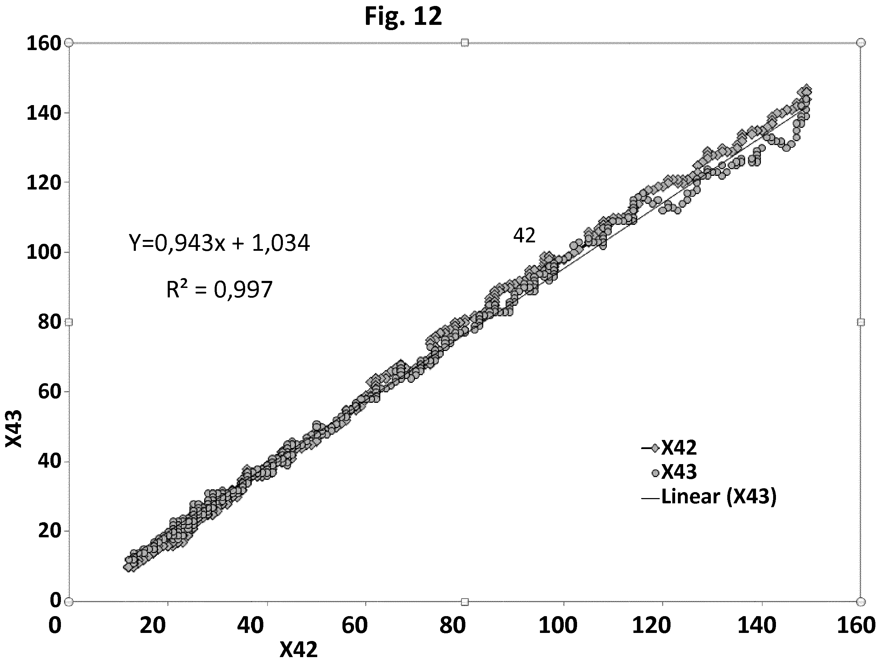

Für höhere Konzentrationen größer 100 bis 10000 µg/m³ wurden Abweichungen deutlich unter 10% des Ablesewertes realisiert. Korrelationsmessungen zwischen dem Referenzgerät und den ersten Prototypen des Gefahrenmelders zeigen Korrelationskoeffizienten von R² > 0.95, üblich sind Werte um 0.98 und höher, siehe Fig.11. Bei einer sehr genauen Abstimmung wurden unter realen Bedingungen sogar 0,996 erreicht, Fig.11. Der Gleichlauf zwischen mehreren Gefahrenmeldern korreliert ebenfalls bei Werten deutlich über R² > 0,95, siehe Fig.12 mit R² > 0,99.

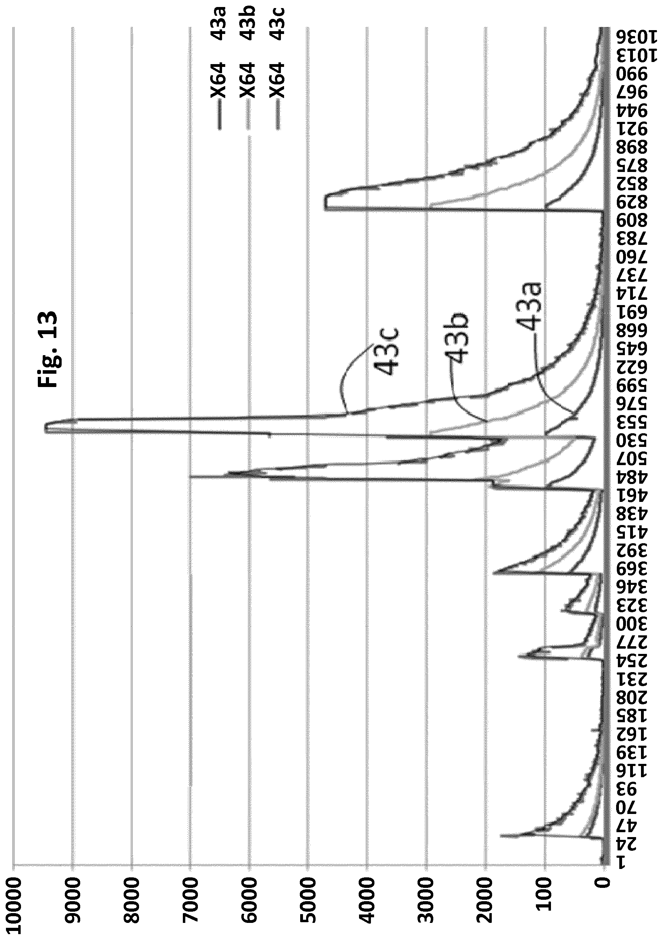

Weitere Kalibriermessungen mit Dolomitpartikeln, wurden durchgeführt. Fig.13 zeigt die Messkurven über die Zeit bei verschiedenen Konzentrationen mit Dolomitpartikeln, für die Sortierpositionen 48 (43a), 65 (43b) und 95 (43c). Daran ist zu erkennen, dass die Werte an den Sortierpositionen 48, bei jeweils gleicher Dolomitpartikelkonzentration, gerade bei hohen Dolomitpartikelkonzentrationen, erheblich niedrigere Messwerte zeigen, als an der Sortierposition 95. Somit lässt trotz der insgesamt hohen Partikelkonzentration ein falscher Rauchalarm vermeiden und trotzdem sogar eine hohe Staubbelastung anzeigen.

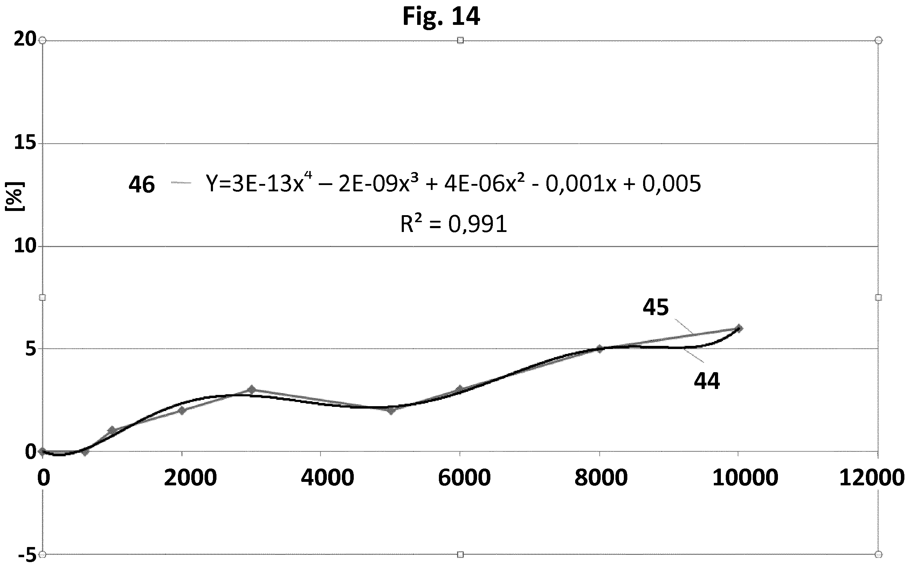

Um dieses Messverfahren auch langzeitstabil und robust zu gestalten, ist die Degradation des Lichtsenders zu berücksichtigen. Bei z.B. 100 Lichtpulsen pro Sekunde ergeben sich bei 8 Stunden Betrieb pro Tag immerhin 2,88 Mio. Pulse. In Fig.14 ist die gemessene Degradation 45 einer Sendediode in Prozent im Zeitraum bis 10.000 Stunden aufgetragen. Diese beträgt nach 10.000 Stunden, also nach 1.250 8h-Tagen oder 10,8 Mrd. Pulsen, etwa 6%. Dieser Verlauf lässt sich mittels eines Polynoms 4.Grades 46 sehr gut nähern. Erfasst man die Betriebsdauer mittels der RTC-Real Time Clock, kann dieser Effekt über einen langen Zeitraum, etwa 3,5 Jahre, sehr gut kompensiert werden. Üblich sind jedoch zwischenzeitliche Kalibrierungen, spätestens nach einem Jahr (2.500-3.000 Betriebsstunden, bei einem 8h-Tag).

Ein weiterer Einfluss auf die Genauigkeit des Gefahrenmelders kann die Verschmutzung der Optik 9 und 10 sein. Um dies zu verhindern, werden vorzugsweise die Optiken mit einer partikelfreien Scher-Strömung 47, vorzugsweise aus Schlitzdüsen 48 und 49, beaufschlagt. Die partikelfreie Strömung wird teilweise durch die Pumpeinheit 6 mit einem nachgeschalteten sogenannten Nullfilter 5 erzeugt. Dieses Verfahren verhindert zuverlässig eine schleichende Verschmutzung der Optik bzw. Linsen, da sich die Kleinstpartikel nicht gegen diese Strömung bewegen können. Damit wird die Optik zuverlässig partikelfrei gehalten. Zusätzlich kann die Optik 9 und 10 mit einer speziellen Beschichtung aus Nanopartikeln ausgeführt sein, die staubabweisend ist.

## Patentansprüche

1. Verfahren zur Detektion von Rauch, mit einem optischen Streulichtdetektor, mit mindestens einem Lichtsender (7), der Licht (13) in ein Messvolumen (16) aussendet, und mit mindestens einem unter mindestens einem Winkel (15) zur Strahlungsachse des Lichtsenders (7) angeordneten Lichtempfänger (8), der von Rauch (12) und/oder Staub innerhalb des Messvolumens gestreutes Licht (14) empfängt, wobei Messwerte (32, 33, 34, 35) des Lichtempfängers (8) erfasst werden,
**dadurch gekennzeichnet, dass** zyklisch eine erste Anzahl n, der Messwerte eines Empfängers (8), aus einem Streuwinkel erfasst wird und die Messwerte der ersten Anzahl n nach deren Größe, insbesondere aufsteigend vom kleinsten Messwert zum größten Messwert, sortiert werden und somit einzelnen Sortierpositionen zugeordnet werden, wobei mindestens ein erster Teil m (36a, 37a) der sortierten Messwerte Rauch zugeordnet wird und/oder ein zweiter Teil I (37c) Staub zugeordnet wird und wobei der erste Teil innerhalb des Bereich der kleineren der sortierten Messwerte und der zweite Teil im Bereich der größeren der sortierten Messwerte zugeordnet wird.

2. Verfahren zur Detektion von Rauch nach Anspruch 1, **dadurch gekennzeichnet, dass** aus einer vorgebbaren zweiten Anzahl (29) von Messwerten der Signale des Lichtempfängers mindestens ein charakteristischer Wert (32, 33, 34, 35) gewonnen wird, insbesondere ein Maximum und/oder Minimum oder Mittelwert, und dieser mindestens eine charakteristische Wert als einer oder mehrere der Messwerte der ersten Anzahl von n Messwerten verwendet wird.

3. Verfahren zur Detektion von Rauch nach mindestens einem der vorhergehenden Ansprüche 1-2, **dadurch gekennzeichnet, dass** der mindestens eine erste Teil m (36a, 37a) aus den sortierten Messwerten der ersten Anzahl von n Messwerten in mindestens einem frei wählbaren ersten Fenster zusammengefasst wird, und/oder der zweite Teil I (37c) in mindestens einem frei wählbaren zweiten Fenster zusammengefasst wird.

4. Verfahren zur Detektion von Rauch nach mindestens einem der vorhergehenden Ansprüche 1-3, **dadurch gekennzeichnet, dass** eine Serie erster Anzahlen n der Messwerte mit einem rauchfreien und/oder staubfreien Messvolumen (16) erfasst, sortiert und entsprechend ihren Sortierpositionen 1-n gemittelt wird und als Normalniveau und/oder Nullniveau abgespeichert wird.

5. Verfahren zur Detektion von Rauch nach Anspruch 4, **dadurch gekennzeichnet, dass** mindestens ein erster Teil m (36a, 37a) aus der gemittelten ersten Anzahl sortierter Messwerte der Serie als Normalniveau und/oder Nullniveau für Rauch (36a, 37a) abgespeichert wird und/oder mindestens ein zweiter Teil I (37c) der gemittelten ersten Anzahl sortierter Messwerte der Serie als Normalniveau und/oder Nullniveau für Staub abgespeichert wird und/oder mindestens ein dritter Teil k der gemittelten ersten Anzahl sortierter Messwerte als allgemeines Aerosol Normalniveau und/oder Nullniveau abgespeichert wird.

6. Verfahren zur Detektion von Rauch nach einem der Ansprüche 4 und 5, **dadurch gekennzeichnet, dass** die Rauch- und Staubfreiheit des Messvolumens durch - Beaufschlagen des Messvolumens mit partikelfreier Luft und/oder hermetisches Abdichten eines Gehäuses, in dem das Messvolumen liegt, erzeugt wird.

7. Verfahren zur Detektion von Rauch nach mindestens einem der vorhergehenden Ansprüche 1-6, **dadurch gekennzeichnet, dass** der erste Teil m (36a, 37a) aus den sortierten Messwerten im Bereich der Sortierpositionen 1 - 0,7n, vorzugsweise im Bereich 0,1n - 0,5n und besonders bevorzugt im Bereich 0,1n - 0,3n, festgelegt wird und/oder der zweite Teil I (37c) im Bereich der Sortierpositionen 0,5n - n, bevorzugt im Bereich 0,7n - n und besonders bevorzugt im Bereich 0,8n- 0,95n, festgelegt wird und/oder der dritte Teil k aus den sortierten Messwerten im Bereich der Sortierpositionen um 0,5n herum festgelegt wird, wobei der kleinste Messwert an der Sortierposition 1 und der größte Messwert an der Sortierposition n liegt.

8. Verfahren zur Detektion von Rauch nach einem der vorhergehenden Ansprüche, **dadurch gekennzeichnet, dass** die aktuellen Messwerte des ersten Teils m (37a), vorzugsweise nach Abzug der korrespondierenden Normalniveau- und/oder Nullniveauwerte und über alle in dem ersten Teil enthaltenen Messwerte gemittelt, als Rauchsignal ausgegeben werden und/oder die aktuellen Messwerte des zweiten Teils l, vorzugsweise nach Abzug der korrespondierenden Normalniveau und/oder Nullniveau Werte und über alle im zweiten Teil enthaltenen Messwerte gemittelt, als Staubwert ausgegeben werden.

9. Verfahren zur Detektion von Rauch nach Anspruch 8, **dadurch gekennzeichnet, dass** ein Brandalarm ausgelöst wird, wenn das Rauchsignal einen vorgebbaren und/oder einstellbaren Schwellwert, insbesondere für eine vorgebbare Zeitdauer, überschreitet.

10. Verfahren zur Detektion von Rauch nach einem der vorhergehenden Ansprüche, **dadurch gekennzeichnet, dass** das Messvolumen (16) von einem Luftstrom durchströmt wird, der den zu detektierenden Rauch, insbesondere über eine Rauchansaugleitung von einem Überwachungsbereich zum Messvolumen (16), transportiert.

11. Gefahrenmelder zur Detektion von Rauch, geeignet zur Durchführung eines Verfahrens nach einem der Ansprüche 1-10, mit mindestens einem Lichtsender (7), der Licht in ein Messvolumen (16) aussendet (13), und mit mindestens einem unter mindestens einem Winkel (15) zur Strahlungsachse des Lichtsenders (7) angeordneten Lichtempfänger (8), der von Rauch und/oder Staub (12) innerhalb des Messvolumens (16) gestreutes Licht (14) empfängt, wobei Messwerte der Signale (32, 33, 34, 35) des Lichtempfängers (8) erfasst werden, **dadurch gekennzeichnet, dass** der Melder einen Speicher umfasst, in dem eine erste Anzahl n der erfassten Messwerte abgelegt wird und der Melder eine Sortiereinrichtung aufweist, welche die erste Anzahl n der unter einem Streuwinkel erfassten Messwerte eines Empfängers der Größe nach sortiert und einzelnen Sortierpositionen zuweist, wobei der Gefahrenmelder eine Steuerungs- und/oder Auswerteeinheit (17) umfasst, welche eingerichtet ist, mindestens einen ersten Teil m (37a) der sortierten Messwerte Rauch zu zuordnen und/oder einen zweiten Teil l (37c) der sortierten Messwerte Staub zu zuordnen und wobei der erste Teil innerhalb des Bereich der kleineren der sortierten Messwerte und der zweite Teil im Bereich der größeren der sortierten Messwerte zugeordnet wird.

12. Gefahrenmelder nach Anspruch 11, **dadurch gekennzeichnet, dass** die Steuerungs- und/oder Auswerteeinheit (17) eingerichtet ist, den mindestens einen ersten Teil m (37a) der sortierten Messwerte, der ersten Anzahl von n Messwerten, in mindestens einem frei wählbaren ersten Fenster zusammenzufassen, und/oder den zweiten Teil l (37c), der sortierten Messwerte, der ersten Anzahl von n Messwerten, in mindestens einem frei wählbaren zweiten Fenster zusammenzufassen.

13. Gefahrenmelder nach Anspruch 12, **dadurch gekennzeichnet, dass** die Steuerungs- und/oder Auswerteeinheit eingerichtet ist, die aktuellen Messwerte des ersten Teils m (37a), vorzugsweise nach Abzug korrespondierender Normalniveau- und/oder Nullniveauwerte und über alle enthaltenen Messwerte gemittelt, als Rauchsignal auszugeben und/oder die aktuellen Messwerte des zweiten Teils l, vorzugsweise nach Abzug der korrespondierender Normalniveau und/oder Nullniveau Werte und vorzugsweise über alle enthaltenen Messwerte gemittelt, als Staubwert auszugeben.

14. Gefahrenmelder nach Anspruch 13, **dadurch gekennzeichnet, dass** die Steuerungs- und/oder Auswerteeinheit (17) eingerichtet ist, ein Brandalarmsignal zu erzeugen, wenn das Rauchsignal einen vorgebbaren und/oder einstellbaren Schwellwert für eine vorgebbare Zeitdauer überschreitet.

15. Gefahrenmelder nach einem oder mehreren der Ansprüche 11-14, **dadurch gekennzeichnet, dass** der Gefahrenmelder einen Lüfter (6, 4) umfasst, der Luft, insbesondere über eine Ansaugleitung, aus einem zu überwachenden Raum ansaugt und dem Messvolumen zuführt, so dass das Messvolumen, von der Luft aus dem zu überwachenden Raum durchströmt wird.

## Claims

1. Method for detecting smoke, with an optical scattered-light detector, with at least one light emitter (7) emitting light (13) into a measurement volume (16), and with at least one light receiver (8) that is arranged at at least an angle (15) with respect to the radiation axis of the light emitter (7) and receives light (14) scattered by smoke (12) and/or dust inside the measurement volume, wherein measurement values (32, 33, 34, 35) of the light receiver (8) are captured,
**characterized in that** a first number n of the measurement values of a receiver (8) are captured cyclically from a scattering angle and the measurement values of the first number n are sorted by the magnitude thereof, in particular ascending from the smallest measurement value to the largest measurement value and are thus assigned to individual sorting positions, wherein at least a first portion m (36a, 37a) of the sorted measurement values is assigned to smoke and/or a second portion 1 (37c) is assigned to dust and wherein the first portion is assigned within the range of the smaller ones of the sorted measurement values and the second portion is assigned in the range of the larger ones of the sorted measurement values.

2. Method for detecting smoke according to Claim 1, **characterized in that** at least one characteristic value (32, 33, 34, 35), in particular a maximum and/or minimum or average value, is obtained from a specifiable second number (29) of measurement values of the signals of the light receiver and said at least one characteristic value is used as one or more of the measurement values of the first number of n measurement values.

3. Method for detecting smoke according to at least one of the preceding Claims 1-2, **characterized in that** the at least one first portion m (36a, 37a) from the sorted measurement values of the first number of n measurement values is combined in at least one freely selectable first window and/or the second portion 1 (37c) is combined in at least one freely selectable second window.

4. Method for detecting smoke according to at least one of the preceding Claims 1-3, **characterized in that** a series of first numbers n of the measurement values with a smoke-free and/or dust-free measurement volume (16) are captured, sorted and averaged in accordance with the sorting positions 1-n thereof and stored as a normal level and/or zero level.

5. Method for detecting smoke according to Claim 4, **characterized in that** at least one first portion m (36a, 37a) from the averaged first number of sorted measurement values of the series is stored as a normal level and/or zero level for smoke (36a, 37a) and/or at least one second portion 1 (37c) of the averaged first number of sorted measurement values of the series is stored as a normal level and/or zero level for dust and/or at least one third portion k of the averaged first number of sorted measurement values is stored as a general aerosol normal level and/or zero level.

6. Method for detecting smoke according to either of Claims 4 and 5, **characterized in that** the freedom from smoke and dust of the measurement volume is brought about by applying particle-free air to the measurement volume and/or by hermetically sealing a housing in which the measurement volume is located.

7. Method for detecting smoke according to at least one of the preceding Claims 1-6, **characterized in that** the first portion m (36a, 37a) from the sorted measurement values is defined in the range of the sorting positions 1 - 0.7n, preferably in the range 0.1n - 0.5n and with particular preference in the range 0.1n - 0.3n and/or the second portion 1 (37c) is defined in the range of the sorting positions 0.5n - n, preferably in the range 0.7n - n and with particular preference in the range 0.8n - 0.95n and/or the third portion k from the sorted measurement values is defined in the range of the sorting positions around 0.5n, with the smallest measurement value being at the sorting position 1 and the largest measurement value being at the sorting position n.

8. Method for detecting smoke according to one of the preceding claims, **characterized in that** the current measurement values of the first portion m (37a) are output, preferably after subtraction of the corresponding normal level values and/or zero level values and averaged over all the measurement values contained in the first portion, as a smoke signal and/or the current measurement values of the second portion 1 are output, preferably after subtraction of the corresponding normal level values and/or zero level values and averaged over all the measurement values contained in the section portion, as dust value.

9. Method for detecting smoke according to Claim 8, **characterized in that** a fire alarm is triggered if the smoke signal exceeds a specifiable and/or settable threshold value, in particular for a specifiable time period.

10. Method for detecting smoke according to one of the preceding claims, **characterized in that** an air flow that transports the smoke to be detected, in particular via a smoke intake suction line from a monitoring region to the measurement volume (16), flows through the measurement volume (16).

11. Hazard alarm unit for detecting smoke, suitable for performing a method according to one of Claims 1-10, with at least one light emitter (7) emitting (13) light into a measurement volume (16), and with at least one light receiver (8) that is arranged at at least an angle (15) with respect to the radiation axis of the light emitter (7) and receives light (14) scattered by smoke and/or dust (12) inside the measurement volume (16), wherein measurement values of the signals (32, 33, 34, 35) of the light receiver (8) are captured, **characterized in that** the alarm unit comprises a memory in which a first number n of the captured measurement values are stored and the alarm unit has a sorting device that sorts the first number n of the measurement values of a receiver that are captured at a scattering angle by magnitude and assigns them to individual sorting positions, wherein the hazard alarm unit comprises a control and/or evaluation unit (17) which is configured to assign at least one first portion m (37a) of the sorted measurement values to smoke and/or to assign a second portion 1 (37c) of the sorted measurement values to dust and wherein the first portion is assigned within the range of the smaller ones of the sorted measurement values and the second portion is assigned in the range of the larger ones of the sorted measurement values.

12. Hazard alarm unit according to Claim 11, **characterized in that** the control and/or evaluation device (17) is configured to combine the at least one first portion m (37a) of the sorted measurement values, of the number of n measurement values, in at least one freely selectable first window and/or to combine the second portion 1 (37c) of the sorted measurement values, of the first number of n measurement values, in at least one freely selectable second window.

13. Hazard alarm unit according to Claim 12, **characterized in that** the control and/or evaluation unit is configured to output the current measurement values of the first portion m (37a), preferably after subtraction of corresponding normal level values and/or zero level values and averaged over all the contained measurement values, as a smoke signal and/or to output the current measurement values of the second portion 1, preferably after subtraction of the corresponding normal level values and/or zero level values and preferably averaged over all the contained measurement values, as a dust value.

14. Hazard alarm unit according to Claim 13, **characterized in that** the control and/or evaluation unit (17) is configured to generate a smoke alarm signal if the smoke signal exceeds a specifiable and/or settable threshold value for a specifiable time period.

15. Hazard alarm unit according to one or more of Claims 11-14, **characterized in that** the hazard alarm unit comprises a fan (6, 4) that takes in air by suction, in particular via an intake suction line, from a space to be monitored and delivers it to the measurement volume such that the air from the space to be monitored flows through the measurement volume.

## Revendications

1. Procédé de détection de fumée avec un détecteur de lumière diffusée optique, comprenant au moins un émetteur de lumière (7) qui émet de la lumière (13) dans un volume de mesure (16) et comprenant au moins un récepteur de lumière (8), disposé selon au moins un angle (15) par rapport à l'axe de rayonnement de l'émetteur de lumière (7), qui reçoit la lumière (14) diffusée par la fumée (12) et/ou la poussière à l'intérieur du volume de mesure, des valeurs mesurées (32, 33, 34, 35) du récepteur de lumière (8) étant acquises,
**caractérisé en ce qu'**un premier nombre n des valeurs mesurées d'un récepteur (8) sont acquises cycliquement à partir d'un angle de diffusion et les valeurs mesurées du premier nombre n sont triées en fonction de leur importance, notamment dans l'ordre croissant de la plus petite valeur mesurée à la plus grande valeur mesurée, et sont ainsi affectées à des positions de tri individuelles, la fumée étant affectée à au moins une première partie m (36a, 37a) des valeurs mesurées triées et/ou la poussière étant affectée à une deuxième partie l (37c) et la première partie étant affectée au sein de la plage des plus petites des valeurs mesurées triées et la deuxième partie dans la plage des plus grandes des valeurs mesurées triées.

2. Procédé de détection de fumée selon la revendication 1, **caractérisé en ce qu'**au moins une valeur caractéristique (32, 33, 34, 35) est obtenue à partir d'un deuxième nombre (29) pouvant être prédéfini de valeurs mesurées des signaux du récepteur de lumière, notamment un maximum et/ou un minimum ou une valeur moyenne, et cette au moins une valeur caractéristique est utilisée comme l'une ou plusieurs des valeurs mesurées du premier nombre de n valeurs mesurées.

3. Procédé de détection de fumée selon au moins l'une des revendications 1 à 2, **caractérisé en ce que** l'au moins une première partie m (36a, 37a) issue des valeurs mesurées triées du premier nombre de n valeurs mesurées est regroupée dans au moins une première fenêtre pouvant être choisie librement et/ou la deuxième partie l (37c) est regroupée dans au moins une deuxième fenêtre pouvant être choisie librement.

4. Procédé de détection de fumée selon au moins l'une des revendications 1 à 3, **caractérisé en ce qu'**une série de premiers nombres n des valeurs mesurées est acquise avec un volume de mesure (16) exempt de fumée et/ou exempt de poussière, triée puis leur moyenne est calculée en fonction de leurs positions de tri 1-n et mémorisée en tant que niveau normal et/ou niveau nul.

5. Procédé de détection de fumée selon la revendication 4, **caractérisé en ce qu'**au moins une première partie m (36a, 37a) issue du premier nombre de valeurs mesurées triées de la série dont la moyenne a été calculée est mémorisée en tant que niveau normal et/ou niveau nul pour la fumée (36a, 37a) et/ou au moins une deuxième partie l (37c) du premier nombre de valeurs mesurées triées de la série dont la moyenne a été calculée est mémorisée en tant que niveau normal et/ou niveau nul pour la poussière et/ou au moins une troisième partie k du premier nombre de valeurs mesurées triées dont la moyenne a été calculée est mémorisée en tant que niveau normal et/ou niveau nul général d'aérosol.

6. Procédé de détection de fumée selon l'une des revendications 4 et 5, **caractérisé en ce que** l'absence de fumée et de poussière dans le volume de mesure est produite en chargeant le volume de mesure avec de l'air exempt de particules et/ou par fermeture hermétique d'un boîtier dans lequel se trouve le volume de mesure.

7. Procédé de détection de fumée selon au moins l'une des revendications 1 à 6, **caractérisé en ce que** la première partie m (36a, 37a) issue des valeurs mesurées triées est spécifiée dans la plage des positions de tri de 1 à 0,7n, de préférence dans la plage de 0,1n à 0,5n et notamment de préférence dans la plage de 0,1n à 0,3n et/ou la deuxième partie l (37c) est spécifiée dans la plage des positions de tri de 0,5n à n, de préférence dans la plage de 0,7n à n et notamment de préférence dans la plage de 0,8n à 0,95n et/ou la troisième partie k issue des valeurs mesurées triées est spécifiée dans la plage des positions de tri autour de 0,5n, la plus petite valeur mesurée se trouvant à la position de tri 1 et la plus grande valeur mesurée à la position de tri n.

8. Procédé de détection de fumée selon l'une des revendications précédentes, **caractérisé en ce que** les valeurs mesurées actuelles de la première partie m (37a) sont délivrées sous la forme d'un signal de fumée, de préférence après déduction des valeurs correspondantes du niveau normal et/ou du niveau nul et en tant que moyenne calculée de toutes les valeurs mesurées incluses dans la première partie, et/ou les valeurs mesurées actuelles de la deuxième partie l sont délivrées sous la forme d'un signal de poussière, de préférence après déduction des valeurs correspondantes du niveau normal et/ou du niveau nul et en tant que moyenne calculée de toutes les valeurs mesurées incluses dans la deuxième partie.

9. Procédé de détection de fumée selon la revendication 8, **caractérisé en ce qu'**une alarme d'incendie est déclenchée lorsque le signal de fumée dépasse une valeur de seuil pouvant être prédéfinie et/ou réglable, notamment pendant une durée pouvant être prédéfinie.

10. Procédé de détection de fumée selon l'une des revendications précédentes, **caractérisé en ce que** le volume de mesure (16) est traversé par un flux d'air qui transporte la fumée à détecter, notamment par le biais d'une conduite d'aspiration de fumée depuis une zone de surveillance vers le volume de mesure (16).

11. Avertisseur de danger destiné à la détection de fumée, adapté pour mettre en œuvre un procédé de détection de fumée selon l'une des revendications 1 à 10, comprenant au moins un émetteur de lumière (7) qui émet de la lumière (13) dans un volume de mesure (16) et comprenant au moins un récepteur de lumière (8), disposé selon au moins un angle (15) par rapport à l'axe de rayonnement de l'émetteur de lumière (7), qui reçoit la lumière (14) diffusée par la fumée et/ou la poussière (12) à l'intérieur du volume de mesure (16), des valeurs mesurées des signaux (32, 33, 34, 35) du récepteur de lumière (8) étant acquises, **caractérisé en ce que** l'avertisseur comprend une mémoire dans laquelle est stocké un premier nombre n des valeurs mesurées acquises et l'avertisseur possède un dispositif de tri qui trie le premier nombre n de valeurs mesurées d'un récepteur acquises sous un angle de diffusion en fonction de leur importance et les assigne à des positions de tri individuelles, l'avertisseur de danger comprenant une unité de commande et/ou d'interprétation (17) qui est conçue pour affecter la fumée à au moins une première partie m (37a) des valeurs mesurées triées et/ou affecter la poussière à une deuxième partie l (37c) des valeurs mesurées triées et la première partie étant affectée au sein de la plage des plus petites des valeurs mesurées triées et la deuxième partie dans la plage des plus grandes des valeurs mesurées triées.

12. Avertisseur de danger selon la revendication 11, **caractérisé en ce que** l'unité de commande et/ou d'interprétation (17) est conçue pour regrouper l'au moins une première partie m (37a) des valeurs mesurées triées du premier nombre de n valeurs mesurées dans au moins une première fenêtre pouvant être choisie librement et/ou regrouper la deuxième partie l (37c) des valeurs mesurées triées du premier nombre de n valeurs mesurées dans au moins une deuxième fenêtre pouvant être choisie librement.

13. Avertisseur de danger selon la revendication 12, **caractérisé en ce que** l'unité de commande et/ou d'interprétation est conçue pour délivrer les valeurs mesurées actuelles de la première partie m (37a) sous la forme d'un signal de fumée, de préférence après déduction des valeurs correspondantes du niveau normal et/ou du niveau nul et en tant que moyenne calculée de toutes les valeurs mesurées obtenues, et/ou délivrer les valeurs mesurées actuelles de la deuxième partie l sous la forme d'un signal de poussière, de préférence après déduction des valeurs correspondantes du niveau normal et/ou du niveau nul et en tant que moyenne calculée de toutes les valeurs mesurées obtenues.

14. Avertisseur de danger selon la revendication 13, **caractérisé en ce que** l'unité de commande et/ou d'interprétation (17) est conçue pour générer un signal d'alarme d'incendie lorsque le signal de fumée dépasse une valeur de seuil pouvant être prédéfinie et/ou réglable pendant une durée pouvant être prédéfinie.

15. Avertisseur de danger selon une ou plusieurs des revendications 11 à 14, **caractérisé en ce que** l'avertisseur de danger comporte un ventilateur (6, 4) qui aspire de l'air, notamment par le biais d'une conduite d'aspiration, depuis un espace à surveiller et l'achemine au volume de mesure, de sorte que le volume de mesure est traversé par le flux d'air en provenance de l'espace à surveiller.
